# EUROPÄISCHE PATENTANMELDUNG

(11) **EP 3 960 612 A1**
(43) Veröffentlichungstag der Anmeldung: **02.03.2022**
(21) Anmeldenummer: 21020413.7
(22) Anmeldetag: 13.08.2021
(51) Int. Cl.: B62M 9/12, B62K 25/02

(54) **MEHRFACHRITZELANORDNUNG FÜR EINE HINTERRADBAUGRUPPE FÜR EIN FAHRRAD UND HINTERRADBAUGRUPPE**

(30) Priorität: 01.09.2020 DE 102020005373
(71) Anmelder: SRAM Deutschland GmbH, 97424 Schweinfurt (DE)
(72) Erfinder: Braedt, Henrik, 97456 Dittelbrunn/OT Hambach (DE); Heyna, Sebastian, 97456 Dittelbrunn/OT Hambach (DE)

(57) **Zusammenfassung**

Es wird eine Mehrfachritzelanordnung (126; 1026) für eine Hinterradbaugruppe (100; 1000) für ein Fahrrad mit Kettenschaltung bereitgestellt, wobei die Mehrfachritzelanordnung (126; 1026) eine Drehachse (124; 1024) aufweist und zur drehfesten Kopplung mit einem Antreiber (116; 1016) der Hinterradbaugruppe (100; 1000) ausgebildet ist, wobei die Mehrfachritzelanordnung wenigstens 11 Ritzel mit sich unterscheidenden Zähnezahlen umfasst. Jedes Ritzel weist im Bereich seiner Zähne eine Innenseitenfläche (130, 1030) und eine Außenseitenfläche (128; 1028) sowie eine zwischen der Innenseitenfläche (130, 1030) und der Außenseitenfläche (128; 1028) liegende, orthogonal zur Drehachse (124, 1024) verlaufende Ritzelmittelebene (131; 1031) auf. Die Mehrfachritzelanordnung ist derart ausgebildet ist, dass im montierten Zustand wenigstens zwei Ritzel (R12, R11) mit den kleinsten Zähnezahlen radial freitragend ausgeführt und über wenigstens ein weiteres Ritzel (R10) mit größerer Zähnezahl mit dem Antreiber (116, 1016) gekoppelt sind und die drei Ritzel (R12, R11, R10) mit den kleinsten Zähnezahlen derart angeordnet sind, dass die Ritzelmittelebene (131; 1031) des Ritzels (R10) mit der drittkleinsten Zähnezahl der Mehrfachritzelanordnung im Bereich einer axialen Stirnfläche (142; 1042) des Antreibers (116; 1016) oder axial außerhalb des Antreibers (116; 1016) verläuft.

## Beschreibung

Die vorliegende Erfindung betrifft eine Mehrfachritzelanordnung für eine Hinterradbaugruppe für ein Fahrrad mit Kettenschaltung, die zur Montage auf einer Hinterradnabe eines Fahrrades vorgesehen ist. Ferner betrifft die Erfindung eine Hinterradbaugruppe für ein Fahrrad mit Kettenschaltung mit einer Mehrfachritzelanordnung. Zudem betrifft die Erfindung eine Hinterradbaugruppe und einen Fahrradrahmen für ein Fahrrad mit Kettenschaltung, bei der die Hinterradbaugruppe an der Hinterradnabe angebracht ist und die Hinterradnabe mit dem Fahrradrahmen verbunden ist.

Eine Hinterradbaugruppe für ein Fahrrad mit Kettenschaltung umfasst typischerweise eine Mehrfachritzelanordnung, die mit der Hinterradnabe über einen Antreiber gekoppelt oder koppelbar ist. Der Antreiber steht über eine Freilaufkupplung mit der Hinterradnabe in drehmomentübertragendem Eingriff und lässt eine Drehmomentübertragung in der einen Drehrichtung (Antriebsrichtung) zu, wohingegen der Antreiber in der anderen Richtung von der Hinterradnabe über eine Freilaufmechanik drehentkoppelt ist. Die Hinterradnabe ist im Zusammenbauzustand der Hinterradbaugruppe mit dem Fahrradrahmen mit einer Hinterradachse verbunden, die an ihren entgegengesetzten Enden an einem jeweiligen Ausfallende eines Fahrradrahmens angebracht ist. Der Fahrradrahmen legt somit zwischen seinen beiden Ausfallenden und deren Innenabstand zueinander eine Einbaubreite für alle an der Hinterradnabe zu befestigenden Komponenten fest, wie ein Laufrad, einen Antreiber, eine Mehrfachritzelanordnung, eine Nabenendkappe und ggf. weiterer Komponenten beispielsweise zur Anbringung eines hinteren Kettenumwerfers.

In den vergangenen Jahren haben sich Kettenschaltungen mehr und mehr durchgesetzt, bei denen im Bereich der Tretkurbel lediglich ein einziges Kettenrad vorgesehen ist. Diese Entwicklung geht einher mit der stärkeren Verbreitung von motorisch unterstützten Fahrrädern. Sie wurde aber angestoßen durch die Idee, eine gewichtsintensive Anordnung mehrerer Kettenräder mit einem zugeordneten vorderen Umwerfer zu eliminieren. Durch diese Entwicklung wurde es erforderlich, eine größere Übersetzungsspreizung über die Bereitstellung hinreichend vieler Gänge an der hinteren Mehrfachritzelanordnung (Kassette) bereitzustellen. Aufgrund der begrenzten Einbaubreite und der vorgegebenen Breite handelsüblicher Ketten kann aber der steigende Bedarf nach mehr Gängen und folglich mehr Ritzeln nicht einfach dadurch gelöst werden, dass beliebig viele Ritzel der Mehrfachritzelanordnung hinzugefügt werden. Der zur Verfügung stehende Bauraum (Einbaubreite) steht der Breite üblicher Ketten und der entsprechenden Breite der einzelnen Ritzel als limitierender Faktor gegenüber. Um mit einer begrenzten Ritzelanzahl dennoch ein verbessertes Übersetzungsverhältnis zu erzielen, besteht ein Bestreben darin, den Übersetzungsbereich zwischen dem größten und dem kleinsten Ritzel zu vergrößern. Besonders wichtig ist dabei für den Benutzer im professionellen Radsport oder auch im Freizeitsport sowohl einen möglichst kleinen (größtes Ritzel) als auch einen möglichst großen Gang (kleinstes Ritzel) zur Verfügung zu haben, um einerseits steile Anstiege komfortabel fahren zu können und andererseits bei gleicher Trittfrequenz eine hohe Geschwindigkeit zu erzielen. Die dazwischenliegenden Ritzel der Mehrfachritzelanordnung müssen entsprechend aufeinander abgestimmt sein. Große Übersetzungssprünge zwischen benachbarten Ritzeln sind möglich, sollten aber in der Regel vermieden werden.

Für das Bestreben, kleine Ritzel für einen möglichst großen Gang bereitzustellen, setzt die Geometrie des Antreibers bei herkömmlichen Lösungen Grenzen. Herkömmlicherweise sind die Ritzel am radialen Außenumfang des Antreibers befestigt, wodurch ein minimaler Innendurchmesser (Fußkreis) der Ritzel durch den Außendurchmesser des Antreibers bereits vorgegeben ist. Bei der Verwendung von auf dem Markt verbreiteten Antreibern lässt sich aufgrund der Geometrie des Antreibers gerade noch ein kleinstes Ritzel mit 11 Zähnen an der Ritzelanordnung anbringen.

Dennoch besteht ein Bedarf im Radsport an sehr kleinen Ritzeln, d.h. Ritzeln mit 10 oder weniger Zähnen. Um diesem Bedarf gerecht zu werden, gibt es im Stand der Technik Ansätze, einen neuen, sich von dem ersten Antreiber-Typ unterscheidenden Antreiber zu verwenden, der durch geeignete konstruktive Maßnahmen die Anbringung eines Ritzels mit einer Zähnezahl kleiner als 11 zulässt. Derartige Sonderlösungen sind jedoch im Vergleich zu Standardlösungen kostenintensiver aufgrund der geringeren Fertigungszahlen und zudem meist nicht kompatibel mit bereits herkömmlichen Bauteilen einer Hinterradbaugruppe und den handelsüblich verfügbaren Antreibern. Derartige Sonderlösungen lassen sich darüber hinaus im Markt schwer platzieren.

Aus dem Dokument EP 1 342 657 B1 ist ein solcher speziell zur Aufnahme kleinerer Ritzel ausgebildeter Antreiber bekannt. Der Antreiber weist ein erstes röhrenförmiges Element auf, das mit einem Freilaufmechanismus an der Fahrradnabe befestigbar ist. An das axial außenliegende Ende des ersten röhrenförmigen Elements kann ein zweites röhrenförmiges Element mit kleinerem Durchmesser gekoppelt werden. Das zweite röhrenförmige Element weist einen Außendurchmesser auf, der kleiner ist als derjenige des ersten röhrenförmigen Elements und der es erlaubt, darauf ein Ritzel mit 10 Zähnen zu befestigen und radial abzustützen. In einem Ausführungsbeispiel sind die Aufnahme sowie die radiale Abstützung von drei Ritzeln an dem zweiten röhrenförmigen Element gezeigt.

Eine weitere Möglichkeit zur Verwendung von zwei Ritzeln mit einem Innendurchmesser, der kleiner ist als ein Außendurchmesser des Antreibers, ist in der Offenlegungsschrift DE 10 2017 004 853 A1 gezeigt. Die zwei Ritzel mit kleinerem Durchmesser sind über einen ersten Schaftabschnitt miteinander und mit einem weiteren Schaftabschnitt mit einem kleinsten auf dem Antreiber angeordneten Ritzel verbunden und werden von einem Sperrelement gegen eine axiale Verschiebung gesichert. Das Sperrelement weist einen Außendurchmesser auf, der ein Eingreifen des Sperrelements in einen radial innenliegenden Bereich des Antreibers ermöglicht. In einem Ausführungsbeispiel sind die zwei Ritzel mit kleinerem Innendurchmesser freitragend ausgeführt.

Der Erfindung liegt die Aufgabe zugrunde, eine Mehrfachritzelanordnung bereitzustellen, die gegenüber den Lösungen aus dem Stand der Technik vereinfacht ist und sich bei besserer Ausnutzung der vorgegebenen Einbaubreite auch mit herkömmlichen Antreiber-Typen koppeln lässt.

Diese Aufgabe wird jeweils durch eine Mehrfachritzelanordnung für eine Hinterradbaugruppe für ein Fahrrad mit Kettenschaltung mit den Merkmalen der Aspekte 1 (Anspruch 1), 13, 14 und 21 (Anspruch 5) gelöst. Ferner wird diese Aufgabe durch eine Hinterradbaugruppe und einen Fahrradrahmen für ein Fahrrad mit Kettenschaltung mit den Merkmalen des Aspekts 30 (Anspruch 10) gelöst.

Weitere Ausführungsformen der Erfindung sind in den abhängigen Patentansprüchen angegeben.

Gemäß einem ersten Aspekt der Erfindung weist eine für eine Hinterradbaugruppe für ein Fahrrad mit Kettenschaltung vorgesehene Mehrfachritzelanordnung eine Drehachse auf und ist zur drehfesten Kopplung mit einem Antreiber der Hinterradbaugruppe ausgebildet. Die Mehrfachritzelanordnung umfasst wenigstens 11 Ritzel mit sich unterscheidenden Zähnezahlen, wobei jedes Ritzel im Bereich seiner Zähne eine Innenseitenfläche und eine Außenseitenfläche sowie eine zwischen der Innenseitenfläche und der Außenseitenfläche liegende, orthogonal zur Drehachse verlaufende Ritzelmittelebene aufweist.

Als Ritzelmittelebene wird eine Ebene verstanden, die orthogonal zu einer Mittelachse der Hinterradnabe und durch das Ritzel, bevorzugt durch die radial äußerste Ritzelspitze, verläuft. Vorzugsweise, aber nicht zwingend notwendig, ist ein Abstand von der Ritzelmittelebene zu beiden axialen Seitenflächen des Ritzels gleich groß. Die beiden Seitenflächen eines Ritzels werden als Innenseitenfläche bzw. Außenseitenfläche bezeichnet. Die Innenseitenfläche weist im Zusammenbauzustand der Hinterradbaugruppe mit dem Fahrradrahmen in Richtung einer Fahrradmittelebene, die orthogonal zu der Drehachse der Mehrfachritzelanordnung und durch einen Mittelpunkt zwischen den Rahmenausfallenden eines Fahrradrahmens verläuft. Die Außenseitenfläche des Ritzels ist entgegengesetzt zu der Innenseitenfläche angeordnet und weist in Richtung des hinteren Rahmenausfallendes des Fahrradrahmens, das in dem Zusammenbauzustand dem Antreiber näher ist.

Im montierten Zustand ist die Mehrfachritzelanordnung derart ausgebildet, dass wenigstens zwei Ritzel mit den kleinsten Zähnezahlen radial freitragend ausgeführt, d. h. sich nicht an diesem radial abstützen, und über wenigstens ein weiteres Ritzel mit größerer Zähnezahl mit dem Antreiber gekoppelt sind. Die drei Ritzel mit den kleinsten Zähnezahlen sind bei der erfindungsgemäßen Lösung derart angeordnet, dass die Ritzelmittelebene des Ritzels mit der drittkleinsten Zähnezahl der Mehrfachritzelanordnung im Bereich einer axialen Stirnfläche des Antreibers oder axial außerhalb des Antreibers verläuft. Es sind bei der erfindungsgemäßen Lösung nach diesem ersten Erfindungsaspekt im montierten Zustand also wenigstens zwei Ritzel vollständig und ein weiteres Ritzel zumindest zu einem Teil zwischen der axialen Stirnfläche des Antreibers und dem hinteren Ausfallende des Fahrrads angeordnet. Im Allgemeinen ist die Mehrfachritzelanordnung im montierten Zustand mit dem Antreiber gekoppelt, sodass ein Drehmoment von der Mehrfachritzelanordnung zu dem Antreiber übertragbar ist.

Die erfindungsgemäße Lösung sieht vor, dass die drei kleinsten Ritzel, d. h. die drei Ritzel mit den kleinsten Zähnezahlen, der Mehrfachritzelanordnung im montierten Zustand derart axial außerhalb des Antreibers angeordnet sind, dass zumindest die Ritzelmittelebene des drittkleinsten Ritzels außerhalb der axialen Stirnfläche des Antreibers liegt oder mit dieser axialen Stirnfläche gerade geometrisch zusammenfällt. Dadurch lässt sich erreichen, dass zumindest die zwei kleinsten Ritzel, d. h. wenigstens die zwei Ritzel mit den kleinsten Zähnezahlen, vollständig axial außerhalb des Antreibers angeordnet sind, d. h. vor diesem liegen, sodass der Außendurchmesser des Antreibers zumindest für diese zwei kleinsten Ritzel nicht mehr als limitierender Faktor zu berücksichtigen ist. Dadurch lassen sich die kleinsten Ritzel der Mehrfachritzelanordnung kleiner ausbilden als beim Stand der Technik bislang möglich. Ferner kann dadurch erreicht werden, dass bei den meisten Gängen die Fahrradkette, die zwischen dem vorderen Kettenrad und der Kassette verläuft, einen gegenüber dem Stand der Technik geringeren Schräglauf bezüglich der Fahrradlängsrichtung einnimmt. Dies führt zu einer größeren Laufruhe und zu geringerem Verschleiß an den Komponenten der Antriebsbaugruppe.

Im Allgemeinen beziehen sich die Angaben "kleinstes Ritzel", "zweitkleinstes Ritzel" und "drittkleinstes Ritzel" auf ein jeweiliges Ritzel der Mehrfachritzelanordnung mit der kleinsten, zweitkleinsten bzw. drittkleinsten Zähnezahl.

Im montierten Zustand sind gemäß einer Weiterbildung der Erfindung zumindest die drei Ritzel mit den kleinsten Zähnezahlen derart angeordnet, dass eine entlang der Innenseitenfläche verlaufende Ritzelinnenebene des Ritzels mit der drittkleinsten Zähnezahl im Bereich einer axialen Stirnfläche oder axial außerhalb des Antreibers verläuft. Mit anderen Worten fällt bei dieser Ausführungsform der Erfindung im montierten Zustand die Ritzelinnenebene des drittkleinsten Ritzels mit der axialen Stirnfläche des Antreibers zusammen oder ist sogar axial außerhalb vom Antreiber angeordnet. In dieser Ausführungsvariante der Erfindung sind wenigstens drei Ritzel vollständig zwischen der axialen Stirnfläche des Antreibers und dem hinteren Ausfallende des Fahrrads angeordnet. Dadurch kann erreicht werden, dass die zuvor genannten Effekte, wie eine größere Laufruhe und ein geringerer Verschleiß an den Komponenten der Antriebsbaugruppe, weiter verstärkt werden.

Bei einer Weiterbildung der Erfindung verläuft die axial äußere Stirnseite des Antreibers orthogonal zu der Drehachse in einer Ebene. Als Stirnseite des Antreibers ist bevorzugt diejenige zu betrachten, die sowohl orthogonal zu der Drehachse verläuft als auch eine am weitesten nach axial außen vorstehende Fläche des Antreibers bildet.

Die Hinterradbaugruppe ist gemäß einer Weiterbildung der Erfindung so ausgestaltet, dass ein Drehmoment von dem Ritzel mit der kleinsten Zähnezahl über ein benachbartes Ritzel mit der zweitkleinsten Zähnezahl zu dem Ritzel mit der drittkleinsten Zähnezahl und von diesem zu dem Antreiber übertragen wird. Mit anderen Worten sind die drei kleinsten Ritzel im montierten Zustand miteinander drehmomentübertragend verbunden.

In einer Ausführungsform können beispielsweise die zwei Ritzel mit den kleinsten Zähnezahlen im montierten Zustand miteinander lösbar verbunden sein, beispielsweise indem diese mit komplementären drehmomentübertragenden Strukturen (Stirnverzahnung etc.) ineinander eingreifen und eine vordefinierte Drehorientierung der zwei Ritzel zueinander festlegen. Beispielsweise ist eine lösbare Verbindung vorgesehen, wie ein Eingriff der Ritzel mittels Rastzähnen an einem Ritzel und entsprechenden Ausnehmungen an dem direkt benachbarten Ritzel. Eine vorbestimmte Drehorientierung kann beispielsweise dadurch erzielt werden, dass einer der Rastzähne und die entsprechende Ausnehmung eine sich von den anderen unterscheidende Dimensionierung aufweist, sodass genau dieser eine Rastzahn lediglich in diese eine ihm zugeordnete Ausnehmung eingreifen kann. Eine Einstellbarkeit der Drehorientierung von Zahnformationen an den Ritzeln kann zu leichtgängigen Schaltvorgängen führen, was den Fahrkomfort erhöht.

Alternativ können gemäß einer weiteren Ausführungsvariante der Erfindung die zwei Ritzel mit den kleinsten Zähnezahlen im montierten Zustand unlösbar miteinander verbunden sein. Eine unlösbare Verbindung kann in integraler Ausbildung oder bei getrennter Ausbildung durch Anwendung eines Fügeverfahrens erfolgen, beispielsweise durch Verschweißen, Verkleben oder dergleichen. Ferner können alternativ auch 3D-Drucktechnologien Anwendung finden, mit denen zwei oder mehr Ritzel zusammen als ein integrales Bauteil gedruckt werden. Bei einem solchen 3D-Druckverfahren sind die Ritzel beispielsweise lediglich unter Zerstörung lösbar. Auch können die zwei Ritzel über andere Verfahren, wie ein zerspanendes Verfahren, z.B. eine Drehbearbeitung, integral hergestellt sein.

Benachbarte Ritzel der Mehrfachritzelanordnung können, um ein Eingreifen der Kettenglieder zu ermöglichen, voneinander axial beabstandet sein und zudem über Verbindungsmittel miteinander verbunden oder verbindbar sein. Als Verbindungsmittel des Ritzels mit einem benachbarten Ritzel kann ein sich parallel zu der Hinterradachse erstreckender Flanschabschnitt oder ein Haltebolzen vorgesehen sein. Der Flanschabschnitt kann beispielsweise ein Ringelement sein. Diese Verbindungsmittel können sich zwischen zwei sich zugewandten Ritzelflächen erstrecken. Alternativ können alle oder einige Ritzel der Mehrfachritzelanordnung integral mit dem Verbindungsmittel ausgebildet sein. In beiden Alternativen kann ein Abstand der Ritzel zueinander durch die Verbindungsmittel festgelegt sein. Auch können die Verbindungsmittel so ausgelegt sein, dass sie ein Drehmoment zwischen den damit verbundenen Ritzeln übertragen können. Das Verbindungsmittel kann am Innenumfang des Ritzels der zu verbindenden Ritzel mit dem kleineren oder dem größeren Durchmesser angeordnet sein. Es kann somit beispielsweise einen Innendurchmesser wenigstens eines der damit verbundenen Ritzel festlegen. Ferner ist es auch möglich, dass benachbarte Ritzel gleiche Innendurchmesser aufweisen. Beispielsweise können die zwei Ritzel mit den kleinsten Zähnezahlen gemeinsam den gleichen Innendurchmesser aufweisen.

Die oben beanspruchte Anordnung von wenigstens zwei Ritzeln vor dem Antreiber macht es möglich, dass die beiden Ritzel, vorzugsweise drei Ritzel, mit den kleinsten Zähnezahlen den Antreiber zumindest abschnittsweise stirnseitig überspannen, d. h. bei Betrachtung in axialer Richtung vor dem Antreiber angeordnet sind und diesen in dieser Betrachtungsrichtung zumindest abschnittsweise überdecken. Bevorzugt erfolgt die angesprochene Überspannung des Antreibers zudem durch ein an dem Antreiber direkt oder indirekt drehmomentübertragend angebrachtes Ritzel.

Die wenigstens zwei radial freitragenden Ritzel können gemäß einer Weiterbildung der Erfindung im montierten Zustand gegen eine axiale Verschiebung gegenüber dem Antreiber axial fixiert sein. Dazu kann ein Verschlusselement vorgesehen sein, das beispielsweise als Verschlussschraube ausgebildet ist, die dazu geeignet ist, mit einem Außengewinde in ein Innengewinde des Antreibers einzugreifen.

Zur Erzielung einer möglichst platzsparenden Anordnung des Verschlusselements wird gemäß einer Weiterbildung der Erfindung vorgeschlagen, dass das Ritzel mit der kleinsten Zähnezahl an seiner Außenseitenfläche eine axiale und radiale, vorzugsweise ringförmige, Aussparung aufweist, die zur axialen und radialen Aufnahme zumindest eines Abschnitts des Verschlusselements ausgebildet ist. Das Verschlusselement kann an einem axialen Ende eine Auskragung oder einen Flansch aufweisen, die bzw. der im montierten Zustand in die Aussparung vollständig oder teilweise eingreift. Die Auskragung und das Ritzel mit der kleinsten Zähnezahl können demzufolge axial bündig abschließen. Alternativ kann die Auskragung teilweise aus der Aussparung und damit aus dem Ritzel mit der kleinsten Zähnezahl axial hervorstehen, beispielsweise um maximal 2 mm, bevorzugt maximal 1,7 mm, hervorstehen. Beispielsweise kann die Auskragung 1,55 mm +/- 0,20 mm von der Aussparung hervorstehen.

Gemäß einer Ausführungsvariante der Erfindung kann ein Innendurchmesser des Ritzels mit der kleinsten Zähnezahl gleich oder kleiner einem Innengewinde-Durchmesser eines Innengewindes des Antreibers sein, das zur Aufnahme eines Außengewindes eines Verschlusselements ausgebildet ist. Die angesprochenen Gewinde stellen eine mögliche Verbindung des Verschlusselements mit dem Antreiber dar, wodurch die wenigstens zwei freitragenden Ritzel axial fixiert werden.

Im Allgemeinen erlauben Gewindeverbindungen keine exakte Winkelpositionierung der miteinander verschraubten Elemente zueinander, vor allem nicht bei in großen Stückzahlen hergestellten Produkten. Dazu kommt, dass in der Fahrradtechnik gelegentlich zur Wartung oder Reparaturzwecken die Komponenten voneinander gelöst werden, was eine exakte erneute Winkelpositionierung der einzelnen Gewindeverbindungen zueinander nach erneutem Zusammensetzen weiter erschwert. Eine vorbestimmte Winkelpositionierung der Ritzel zueinander im montierten Zustand ist jedoch gerade bei hochpreisigen Fahrradschaltungen erstrebenswert, um leichtgängige und für den Fahrradfahrer kaum spürbare Schaltvorgänge der Fahrradkette zwischen den Ritzeln zu gewährleisten, um so eine möglichst kontinuierliche Drehmomentübertragung gewährleisten. Bei einer Gewindeverbindung des Verschlusselements mit dem Antreiber ist es daher gemäß einer Weiterbildung der Erfindung vorgesehen, dass die Drehorientierung der wenigstens zwei vor dem Antreiber angeordneten Ritzel unabhängig von der Gewindestellung ist. Daher wird gemäß einer Weiterbildung der Erfindung vorgeschlagen, dass wenigstens das kleinste Ritzel relativ zum Verschlusselement drehbar ist. Alternativ können auch die wenigstens zwei kleinsten Ritzel relativ zum Verschlusselement drehbar sein. Auf diese Weise kann die Drehorientierung des kleinsten Ritzels, bevorzugt der wenigstens zwei kleinsten Ritzel, gegenüber Ritzeln mit größeren Zähnezahlen unabhängig von der Gewindestellung zwischen Verschlusselement und Antreiber einstellbar sein. Beispielsweise kann die Drehorientierung des kleinsten Ritzels, bevorzugt der wenigstens zwei kleinsten Ritzel, vor, bei oder nach dem Verbinden von Verschlusselement und Antreiber durch geeignete Festlegemittel festgelegt werden. Durch die definierte Drehorientierung zweier benachbarter Ritzel zueinander werden deren Zahnformationen relativ zueinander ausgerichtet, so dass sich die Fahrradkette leicht aus dem Eingriff mit einem Ritzel löst und in Eingriff mit einem benachbarten Ritzel gelangt, also das Schalten leichtgängig ist.

Die erfindungsgemäße Mehrfachritzelanordnung ermöglicht es, dass gemäß einer Ausführungsform der Erfindung die Mehrfachritzelanordnung wenigstens 12 Ritzel umfasst. In einer Weiterbildung der Erfindung kann die Mehrfachritzelanordnung sogar wenigstens 13 Ritzel umfassen. Das größte Ritzel kann eine Zähnezahl von mindestens 48, insbesondere 50, 51 oder 52 Zähnen aufweisen. Das kleinste Ritzel kann eine Zähnezahl von 10 aufweisen. Auch kleinere Ritzel mit weniger als 10 Zähnen sind erfindungsgemäß möglich, beispielsweise 9 oder 8 Zähne. Begrenzt wird die minimale Zähnezahl durch den minimal möglichen Innendurchmesser des kleinsten Ritzels im Zusammenhang mit der verwendeten Kette.

### Kopplung mit einem ersten Antreiber-Typ ("Standard-Antreiber")

Gemäß einem weiteren Aspekt der Erfindung weist eine für eine Hinterradbaugruppe für ein Fahrrad mit Kettenschaltung vorgesehene Mehrfachritzelanordnung eine Drehachse auf und ist zur drehfesten Kopplung mit einem Antreiber der Hinterradbaugruppe ausgebildet. Die Mehrfachritzelanordnung umfasst wenigstens 11 Ritzel mit sich unterscheidenden Zähnezahlen, wobei jedes Ritzel im Bereich seiner Zähne eine Innenseitenfläche und eine Außenseitenfläche sowie eine zwischen der Innenseitenfläche und der Außenseitenfläche liegende, orthogonal zur Drehachse verlaufende Ritzelmittelebene aufweist.

Insbesondere ist diese Mehrfachritzelanordnung so ausgebildet, dass sie mit einem Antreiber eines ersten Antreiber-Typs gekoppelt oder koppelbar ist. Dabei ist die Mehrfachritzelanordnung derart ausgebildet, dass im montierten Zustand bei einer axialen Länge des ersten Antreiber-Typs von einem Antreiberanschlag zu einer axial äußeren Stirnseite in einem Bereich von 34,5 mm bis 35,9 mm, bevorzugt 34,9 +/-0,3 mm, folgendes gilt: eine erste Distanz in axialer Richtung von dem Antreiberanschlag bis zu der Außenseitenfläche des Ritzels mit der kleinsten Zähnezahl ist größer als 38 mm. Für eine noch bessere Ausnutzung der zur Verfügung stehenden Einbaubreite ist die erste Distanz bevorzugt größer als 39,1 mm, noch bevorzugter 39,9 +/-0,2 mm. Alternativ oder zusätzlich ist bei dem ersten Antreiber-Typ eine zweite Distanz in axialer Richtung von der axial äußeren Stirnseite des ersten Antreiber-Typs zu einer Außenseitenfläche des Ritzels mit der kleinsten Zähnezahl größer als 4,0 mm, bevorzugt 5,0 +/- 0,2 mm. Als axial äußere Stirnseite des Antreibers kann diejenige Stirnseite des Antreibers bezeichnet werden, die im montierten Zustand dem Ritzel mit der kleinsten Zähnezahl näherliegt.

Der im Stand der Technik und im Markt verbreitete erste Antreiber-Typ wird beispielsweise unter der Bezeichnung Hyperglide^{®} Antreiber oder abgekürzt als HG-Antreiber vertrieben.

Der erste Antreiber-Typ kann gemäß einer Ausführungsvariante der Erfindung an einem ersten Bereich seiner radialen Außenfläche ein Mitnehmerprofil aufweisen, das entlang einer ersten axialen Länge von dem Antreiberanschlag in Außenrichtung angeordnet ist. Das Mitnehmerprofil kann dazu vorgesehen sein, mit einem komplementären Profil an einer inneren Umfangsfläche der Mehrfachritzelanordnung in Eingriff zu gelangen. Das Mitnehmerprofil kann Mitnehmervorsprünge oder sogenannte Splines umfassen, die über den Umfang der radialen Außenfläche des Antreibers verteilt angeordnet sein können. Wenigstens einer der Mitnehmervorsprünge oder Splines kann von den anderen abweichen, er kann beispielsweise in Umfangsrichtung breiter oder weniger breit ausgebildet sein, wobei dann ein mit diesem zusammenwirkendes komplementäres Profil eine entsprechende komplementäre Geometrie aufweisen muss. Dadurch wird ermöglicht, eine gewünschte Drehorientierung der daran befestigten Ritzel der Mehrfachritzelanordnung gewährleistet werden kann. Das Mitnehmerprofil kann 8, 9 oder 22 Mitnehmervorsprünge/Splines umfassen, wobei eine Anzahl von 9 oder mehr Splines bevorzugt ist.

Ferner kann gemäß einer Ausführungsvariante der Erfindung bei dem ersten Antreiber-Typ die erste axiale Länge kleiner sein als eine zweite axiale Länge, die sich von dem Antreiberanschlag bis zur axial äußeren Stirnseite des Antreibers erstreckt. Der erste Antreiber-Typ kann an einem zweiten Bereich seiner radialen Außenfläche, der der axial äußeren Stirnseite benachbart ist, frei von dem Mitnehmerprofil sein, beispielsweise in Form einer glatten kreiszylindrischen Außenumfangsfläche. Zudem kann der erste Antreiber-Typ eine Öffnung aufweisen, die sich von einer Antreiber-Mittelachse nach radial außen und von der axial äußeren Stirnseite des Antreibers nach axial innen erstreckt. Die Öffnung kann an ihrer radialen Innenfläche ein Innengewinde aufweisen.

Beispielsweise ist das vorstehend diskutierte Verschlusselement mit dessen Außengewinde in das Innengewinde des ersten Antreiber-Typs einschraubbar. Dadurch ergibt sich eine besonders einfache und zuverlässige Montagemöglichkeit.

In einer weiteren Ausführungsform der Erfindung ist die erste axiale Länge des ersten Antreiber-Typs, entlang der das Mitnehmerprofil an dem Antreiber angeordnet ist, von dem Antreiberanschlag bis zum Ende des Mitnehmerprofils größer als 32,9 mm, bevorzugt 33,2 mm. Alternativ oder zusätzlich ist die zweite axiale Länge des Antreibers von dem Antreiberanschlag bis zu der Stirnseite des Antreibers größer als 34,2 mm, bevorzugt 34,9 +/- 0,2 mm.

Ferner legt der Außendurchmesser des ersten Antreiber-Typs den minimalen Innendurchmesser der daran aufzunehmenden Ritzel fest. Vorzugsweise ist der erste Au-ßendurchmesser des ersten Antreiber-Typs im ersten Bereich entlang der ersten axialen Länge des ersten Antreiber-Typs größer als 34,2 mm, bevorzugt 34,5 +/-0,15 mm. Alternativ oder zusätzlich ist ein zweiter Außendurchmesser des ersten Antreiber-Typs im zweiten Bereich, der der Stirnseite des ersten Antreiber-Typs benachbart ist, größer als 31,4 mm, bevorzugt 32,1 +/- 0,2 mm. In einer weiteren Alternative oder zusätzlich zu den angeführten Durchmessern ist ein erster Außendurchmesser des Innengewindes des ersten Antreiber-Typs axial benachbart seiner Stirnseite größer als 29,8 mm, bevorzugt 30,6 +/- 0,2 mm. Der angesprochene Außendurchmesser wird auch als Nenndurchmesser bezeichnet. Eine bevorzugte Steigung des Innengewindes des ersten Antreiber-Typs ist 24 TPI, sodass das Gewinde auch nach bekannter Bemaßung als M 30,6 x 24 TPI charakterisiert werden kann.

Merkmale der Mehrfachritzelanordnungen gemäß den vorstehend erläuterten Erfindungsaspekten und Ausführungsbeispielen können miteinander kombiniert werden.

### Kopplung mit einem zweiten Antreiber-Typ ("Micro-Spline-Antreiber")

Gemäß einem weiteren Aspekt der Erfindung weist eine für eine Hinterradbaugruppe für ein Fahrrad mit Kettenschaltung vorgesehene Mehrfachritzelanordnung eine Drehachse auf und diese ist zur drehfesten Kopplung mit einem Antreiber der Hinterradbaugruppe ausgebildet. Die Mehrfachritzelanordnung umfasst wenigstens 11 Ritzel mit sich unterscheidenden Zähnezahlen, wobei jedes Ritzel im Bereich seiner Zähne eine Innenseitenfläche und eine Außenseitenfläche sowie eine zwischen der Innenseitenfläche und der Außenseitenfläche liegende, orthogonal zur Drehachse verlaufende Ritzelmittelebene aufweist.

Insbesondere ist diese Mehrfachritzelanordnung so ausgebildet, dass sie mit einem Antreiber eines zweiten Antreiber-Typs gekoppelt oder koppelbar ist. Dabei ist die Mehrfachritzelanordnung derart ausgebildet, dass im montierten Zustand bei einer axialen Länge des ersten Antreiber-Typs von einem Antreiberanschlag zu einer axial äußeren Stirnseite in einem Bereich von 25 mm bis 27 mm, bevorzugt 26,0 +/- 0,2 mm, folgendes gilt: eine erste Distanz in axialer Richtung von einem Antreiberanschlag bis zu der Außenseitenfläche des Ritzels mit der kleinsten Zähnezahl ist größer als 34 mm und ist bevorzugt 35,0 +/- 0,2 mm. Alternativ oder zusätzlich gilt folgendes: bei dem zweiten Antreiber-Typ ist eine zweite Distanz in axialer Richtung von der axial äußeren Stirnseite des zweiten Antreiber-Typs zu einer Außenseitenfläche des Ritzels mit der kleinsten Zähnezahl größer als 8,0 mm, bevorzugt 9,0 +/-0,2 mm.

Jedes Ritzel weist gemäß diesem Erfindungsaspekt im Bereich seiner Zähne eine Innenseitenfläche und eine Außenseitenfläche sowie eine zwischen der Innenseitenfläche und der Außenseitenfläche liegende, orthogonal zur Hinterradnabe verlaufende Ritzelmittelebene auf. Zur Definition der genannten Flächen und Ebene wird auf die vorstehenden Ausführungen zu der Erfindung verwiesen.

Der im Stand der Technik verbreitete zweite Antreiber-Typ, wird beispielsweise unter der Bezeichnung "Micro-Spline" vertrieben.

Der zweite Antreiber-Typ kann an einem ersten Bereich seiner radialen Außenfläche ein Mitnehmerprofil aufweisen, das entlang einer ersten axialen Länge von dem Antreiberanschlag in Außenrichtung angeordnet ist. Das Mitnehmerprofil kann entsprechend den vorherigen Ausführungen in Bezug auf den ersten Antreiber-Typ ausgestaltet sein. Das Mitnehmerprofil des zweiten Antreiber-Typs kann 8, 9 oder 22 Mitnehmervorsprünge/Splines umfassen, wobei eine Anzahl von mehr als 9 Splines bevorzugt ist. Alternativ ist eine Anzahl von genau 22 Splines bevorzugt. Auch kann bei dem zweiten Antreiber-Typ die erste axiale Länge kleiner sein als eine zweite axiale Länge, die sich von dem Antreiberanschlag bis zur Stirnseite des zweiten Antreiber-Typs erstreckt. Der zweiter Antreiber-Typ kann an einem zweiten Bereich seiner radialen Außenfläche, der der Stirnseite des Antreibers benachbart ist, frei von Mitnehmerprofilen sein, beispielsweise in Form einer kreiszylindrischen Umfangsfläche. Zudem kann der zweite Antreiber-Typ eine Öffnung aufweisen, die sich von einer Antreiber-Mittelachse nach radial außen und von der Außenseite nach axial innen erstreckt. Die Öffnung kann an ihrer radialen Innenfläche ein Innengewinde aufweisen.

Gemäß einer Weiterbildung der Erfindung ist das vorstehend erläuterte Verschlusselement mit dessen Außengewinde in das Innengewinde des zweiten Antreiber-Typs einschraubbar.

Nach einer Ausführungsform ist die erste axiale Länge des zweiten Antreiber-Typs, entlang der das Mitnehmerprofil an dem zweiten Antreiber-Typ angeordnet sind, von dem Antreiberanschlag bis zum Ende der Mitnehmerprofile größer als 24,7 mm, bevorzugt 25,7 +/- 0,2 mm. Alternativ oder zusätzlich ist die zweite axiale Länge des zweiten Antreiber-Typs von dem Antreiberanschlag bis zu der Stirnseite des zweiten Antreiber-Typs größer als 25,0 mm, bevorzugt 26,0 +/- 0,2 mm.

Ferner legt der Außendurchmesser des Antreibers den minimalen Innendurchmesser der daran aufzunehmenden Ritzel fest. Vorzugsweise ist der erste Außendurchmesser des zweiten Antreiber-Typs im ersten Bereich entlang der ersten axialen Länge des zweiten Antreiber-Typs größer als 31,6 mm, bevorzugt 32,60 +0,05/-0,1 mm. Der erste Außendurchmesser ist durch die radiale Erstreckung der Mitnehmerprofile bestimmt. Der Durchmesser der die Mitnehmerprofile verbindenden Basisflächen kann um die Höhe der Mitnehmerprofile verringert sein und bevorzugt 30,1 +/- 0,2 mm betragen. Alternativ oder zusätzlich ist ein zweiter Außendurchmesser des zweiten Antreiber-Typs im zweiten Bereich, der der axial äußeren Stirnseite des Antreibers benachbart ist, größer als 28,5 mm, bevorzugt 29,5 +/- 0,1 mm. In einer weiteren Alternative oder zusätzlich zu den angeführten Durchmessern ist ein erster Nennduchmesser des Innengewindes des zweiten Antreiber-Typs axial benachbart seiner Stirnseite größer als 25,2 mm, bevorzugt 26 mm +/- 0,2 mm.

### Kopplung mit einem dritten Antreiber-Typ ("XD-Antreiber")

Gemäß einem weiteren Aspekt der Erfindung weist eine für eine Hinterradbaugruppe für ein Fahrrad mit Kettenschaltung vorgesehene Mehrfachritzelanordnung eine Drehachse auf und diese ist zur drehfesten Kopplung mit einem Antreiber der Hinterradbaugruppe ausgebildet. Die Mehrfachritzelanordnung umfasst wenigstens 11 Ritzel mit sich unterscheidenden Zähnezahlen, wobei jedes Ritzel im Bereich seiner Zähne eine Innenseitenfläche und eine Außenseitenfläche sowie eine zwischen der Innenseitenfläche und der Außenseitenfläche liegende, orthogonal zur Drehachse verlaufende Ritzelmittelebene aufweist.

Insbesondere ist diese Mehrfachritzelanordnung so ausgebildet, dass sie mit einem Antreiber eines dritten Antreiber-Typs gekoppelt oder koppelbar ist. Dabei ist die Mehrfachritzelanordnung derart ausgebildet, dass im montierten Zustand bei einer axialen Länge des ersten Antreiber-Typs von einem Antreiberanschlag zu einer axial äußeren Stirnseite in einem Bereich von 28,5 mm bis 30,5 mm, bevorzugt 29,5 +/-0,2 mm, folgendes gilt: eine erste Distanz in axialer Richtung von dem Antreiberanschlag bis zu der Außenseitenfläche des Ritzels mit der kleinsten Zähnezahl ist größer als 38 mm. Eine noch günstigere Ausnutzung der zur Verfügung stehenden Einbaubreite kann erzielt werden, wenn die erste Distanz bevorzugt größer als 39,1 mm ist, noch bevorzugter 39,9 +/- 0,2 mm ist. Alternativ oder zusätzlich ist bei dem ersten Antreiber-Typ eine zweite Distanz in axialer Richtung von der axial äußeren Stirnseite des ersten Antreiber-Typs zu einer Außenseitenfläche des Ritzels mit der kleinsten Zähnezahl größer als 9,1 mm, bevorzugt 10,4 +/- 0,2 mm. Die vorstehenden Maße der ersten und zweiten Distanz ermöglichen es, dass die für die Hinterradbaugruppe zur Verfügung stehende Einbaubreite effektiver genutzt wird. Es kann beispielsweise eine Mehrfachritzelanordnung mit mehr Ritzeln verwendet werden oder die Mehrfachritzelanordnung kann zur Verringerung des Kettenschräglaufs axial weiter außen platziert werden.

Zur Definition der genannten Flächen und Ebenen wird auf die vorhergehenden Ausführungen der Erfindung verwiesen. Dieser Erfindungsaspekt bezieht sich auf eine Mehrfachritzelanordnung, die mit sich von dem ersten und dem zweiten Antreiber-Typ unterscheidenden Antreiber gekoppelt oder koppelbar ist und im Folgenden als dritter Antreiber-Typ bezeichnet wird.

Als dritter Antreiber-Typ wird ein solcher verstanden, der beispielsweise unter der Bezeichnung XD^{™} Driver Body vertrieben wird.

Gemäß einem weiteren Erfindungsaspekt ist der dritte Antreiber-Typ mehrteilig ausgeführt und umfasst in einer Ausführungsform der Erfindung einen Antreiberkörper und einen Aufnahmekörper. Der Antreiberkörper kann an einem dem Antreiberanschlag benachbarten Bereich seiner Außenumfangsfläche ein Außengewinde aufweisen. Der Aufnahmekörper kann an seiner Innenumfangsfläche ein Innengewinde aufweisen, das dazu eingerichtet ist, in das Außengewinde des Antreiberkörpers einzugreifen.

Im montierten Zustand des mehrteiligen Antreibers kann der Aufnahmekörper radial außerhalb des Antreiberkörpers angeordnet sein und sich mit seinem axial äußeren Endabschnitt nach axial außen über den Antreiberkörper erstrecken. Ein Innendurchmesser des axial äußeren Endabschnitts des Aufnahmekörpers kann kleiner sein als ein Außendurchmesser des Antreiberkörpers.

In einer Ausführungsvariante ist der mehrteilige Antreiber des dritten Antreiber-Typs Teil einer Hinterradbaugruppe und der dritte Antreiber-Typ ist mit der Mehrfachritzelanordnung gekoppelt oder koppelbar. Bevorzugt sind wenigstens zwei Ritzel der Mehrfachritzelanordnung, die die kleinsten Zähnezahlen aufweisen, axial außen vor dem Antreiberkörper radial freitragend angeordnet. Der Aufnahmekörper kann sich radial innerhalb der wenigstens zwei Ritzel erstrecken und diese gegen eine axiale Verschiebung fixieren.

Zur axialen Fixierung der Mehrfachritzelanordnung kann der Aufnahmekörper an seinem axial äußeren Endabschnitt eine Nut aufweisen, die zur Aufnahme eines Sicherungselements, beispielsweise in Form eines Ringelements, eingerichtet ist. In dem zusammengebauten Zustand des dritten Antreiber-Typs kann das Sicherungselement in der Nut aufgenommen sein und mit einer Aussparung in der Mehrfachritzelanordnung, vorzugsweise im Ritzel mit der kleinsten Zähnezahl, in Eingriff stehen.

Darüber hinaus kann im montierten Zustand die axial äußere Stirnseite der Mehrfachritzelanordnung, bevorzugt eine Außenseitenfläche des Ritzels mit der kleinsten Zähnezahl, bündig mit einer axialen Stirnseite des Aufnahmekörpers abschließen. Alternativ kann die axiale Stirnseite des Aufnahmekörpers um maximal 0,9 mm von der Mehrfachritzelanordnung hervorstehen.

Für eine Drehmomentübertragung von der Mehrfachritzelanordnung zu dem dritten Antreiber-Typ kann der Antreiberkörper an seiner Außenumfangsfläche, die benachbart seines Antreiberanschlags angeordnet ist, ein Mitnehmerprofil aufweisen. Das Mitnehmerprofil kann in ein komplementäres Profil der Mehrfachritzelanordnung eingreifen. Beispielsweise ist das Mitnehmerprofil derart ausgebildet, dass es lediglich in ein komplementäres Profil des größten Ritzels der Mehrfachritzelanordnung eingreift. Das Mitnehmerprofil kann 8, 9 oder 22 Mitnehmervorsprünge/Splines umfassen, wobei eine Anzahl von 9 oder mehr Splines bevorzugt ist.

Der Aufnahmekörper kann radial außerhalb des Antreiberkörpers angeordnet sein. Er kann von der zylindrischen Geometrie des Antreiberkörpers abweichen und sich nach axial außen verjüngen. Somit ist das radiale Ausmaß des Aufnahmekörpers möglichst klein, vor allem in einem den kleineren Ritzeln benachbarten Bereich, wo Ritzel mit kleineren Innendurchmesser angeordnet werden können. Der Innendurchmesser bzw. Außendurchmesser des Aufnahmekörpers in dem Bereich zwischen seinem Innengewinde und seinem hervorstehenden axial äußeren Endabschnitt kann konisch zulaufen.

In einer Ausführungsform ist der Aufnahmekörper in einem Bereich mit thermoplastischem Kunststoff, zum Beispiel Polyoxymethylene (POM), oder einem Elastomer versehen. Beispielsweise kann der thermoplastische Kunststoff oder das Elastomer als ein Positionierkörper an den Aufnahmekörper angespritzt sein. Der mit Kunststoff oder Elastomer versehene Bereich kann zur axialen und radialen Positionierung des Aufnahmekörpers gegenüber dem Antreiberkörper dienen. Im montierten Zustand des Antreibers kann der Positionierkörper im Bereich der Schnittstelle zwischen dem Aufnahmekörper und dem Antreiberkörper, also der Antreiberkörper-Schnittstelle, sowie im Bereich der Schnittstelle zwischen dem Antreiberkörper und der Mehrfachritzelanordnung, also der Mehrfachritzelanordnung-Schnittstelle, vorgesehen sein. Der Positionierkörper kann die beiden Schnittstellen ringförmig ummanteln und sowohl an einer Außenumfangsfläche als auch an einer Innenumfangsfläche des Aufnahmekörpers anliegen.

Bevorzugt kann die Aufnahmekörper-Schnittstelle weiter radial innen angeordnet sein als die Mehrfachritzelanordnung-Schnittstelle. Es kann ein axialer Versatz zwischen den Schnittstellen vorhanden sein. Dies hat den Vorteil, dass sich Fertigungstoleranzen des thermoplastischen Kunststoffs oder Elastomers nicht gleichermaßen auf beide Schnittstellen auswirken. Vielmehr können auf diese Weise die Schnittstellen räumlich voneinander getrennt und damit in gewisser Weise entkoppelt sein.

Zur Montage des Aufnahmekörpers an den Antreiberkörper kann der Aufnahmekörper an seiner radialen Innenfläche, bevorzugt an seinem axial äußeren Endabschnitt, eine Werkzeugschnittstelle aufweisen.

Im Falle einer Fehlfunktion eines Fahrrads kann es vorkommen, dass sich die Kette von den Ritzeln löst und sich in Richtung des kleinsten Ritzels der Mehrfachritzelanordnung bewegt. In einem ungünstigen Fall kann sich während des Betriebs dabei die Kette zwischen dem Aufnahmekörper und dem hinteren Ausfallende des Rahmens verklemmen und dann schwer aus dieser Verklemmung lösbar sein. Zur Verhinderung dieses ungünstigen Falles kann der mehrteilige Antreiber einen Ketten-Abwurfschutz umfassen, der an dem Aufnahmekörper oder der Mehrfachritzelanordnung befestigt oder befestigbar ist. Der Ketten-Abwurfschutz kann eine Auskragung nach radial außen aufweisen. Die radial äußere Fläche der Auskragung des Ketten-Abwurfschutzes kann eine schräge Fläche sein, die im montierten Zustand in Richtung des Ritzels mit der kleinsten Zähnezahl abfällt.

Die Auskragung kann im montierten Zustand einen Außendurchmesser aufweisen, der kleiner ist als ein Außendurchmesser des Ritzels mit der kleinsten Zähnezahl. Zur Befestigung des Ketten-Abwurfschutzes kann dieser elastische Befestigungselemente umfassen, die eingerichtet sind, um radial innen in den Aufnahmekörper oder die Mehrfachritzelanordnung einzugreifen. Beispielsweise können die elastischen Halterungselemente des Ketten-Abwurfschutzes in die Werkzeugschnittstelle des Aufnahmekörpers eingreifen. Es sei darauf hinzuweisen, dass der dritte Antreiber-Typ mit den vorstehend definierten Distanzen derart ausgelegt ist, dass noch hinreichend Bauraum für den Ketten-Abwurfschutz vorhanden ist, wenn der dritte Antreiber-Typ in einer Hinterradbaugruppe verwendet wird.

Alle der vorgenannten Mitnehmerprofile umfassen gemäß den vorstehend erläuterten Ausführungsbeispielen an ihrem Außenumfang Profile mit sogenannten Mitnehmervorsprüngen oder Splines. Unter Splines werden insbesondere keilförmige Erhebungen auf der Außenumfangsfläche des jeweiligen Antreibers verstanden. Splines können sich überwiegend in axialer Richtung erstrecken. Vorzugsweise ist die Anzahl der Splines kleiner als 10, bevorzugt kleiner als 9. Die Splines können sich unterscheidende Abmessungen in deren Höhe oder/und Breite oder/und Länge aufweisen.

### Einsatz der erfindungsgemäßen Mehrfachritzelanordnung in einer Hinterradbaugruppe

Gemäß einem weiteren Aspekt bezieht sich die Erfindung auf eine Hinterradbaugruppe für ein Fahrrad mit Kettenschaltung, die eine zwischen zwei gegenüberliegenden Rahmenabschnitten eines Fahrradrahmens anordenbare Hinterradnabe, einen drehbar auf der Hinterradnabe angebrachten Antreiber und eine drehfest mit dem Antreiber gekoppelte oder koppelbare Mehrfachritzelanordnung nach einem der vorangehend beschriebenen Erfindungsaspekten umfasst.

Zur Einstellung eines axialen Hinterradnabenspiels werden gemäß dem Stand der Technik Nabenendkappen eingesetzt. Eine solche Nabenendkappe kann auch die Hinterradbaugruppe gemäß der vorliegenden Erfindung umfassen, die in dem Zusammenbauzustand der Hinterradbaugruppe an der Hinterradnabe in der Außenrichtung axial benachbart zu dem Antreiber angeordnet ist. Ferner kann die Hinterradbaugruppe eine weitere Nabenendkappe umfassen, die benachbart zu dem antreiberferneren Rahmenabschnitt an der Hinterradnabe angeordnet ist. Eine Nabenendkappen-Distanz zwischen axial äußeren Stirnseiten der Nabenendkappen, also zwischen den zwei axial voneinander wegweisenden Stirnseiten der Nabenendkappen, kann mindestens 142 mm sein, ist bevorzugt mindestens 148 mm und ist noch bevorzugter mindestens 157 mm. Die angesprochene Distanz zwischen den Nabenendkappen wird auch als Einbaubreite bezeichnet. D. h., wird in dieser Offenbarung von einer Einbaubreite gesprochen, dann bezieht sich diese auf die Nabenendkappen-Distanz.

Eine dritte Distanz zwischen dem Antreiberanschlag und einer axial äußeren Stirnseite der Nabenendkappe kann größer als 42,5 mm sein, bevorzugt 44,1 +1,0/-0,3 mm sein, wenn die Hinterradbaugruppe einen Antreiber des ersten Antreiber-Typs umfasst. In einer alternativen Ausführungsform kann die dritte Distanz größer als 38,1 mm sein, bevorzugt 39,7 +/- 0,2 mm sein, wenn die Hinterradbaugruppe einen Antreiber des zweiten Antreiber-Typs umfasst. In einer weiteren Alternative kann die dritte Distanz größer als 42,5 mm sein, bevorzugt 44,1 +1,0/-0,2 mm sein, wenn die Hinterradbaugruppe einen Antreiber des dritten Antreiber-Typs umfasst.

### Erfindungsgemäße Hinterradbaugruppe und Fahrradrahmen

Ein weiterer Erfindungsaspekt betrifft eine Hinterradbaugruppe und einen Fahrradrahmen für ein Fahrrad mit Kettenschaltung. Die Hinterradbaugruppe umfasst eine zwischen zwei gegenüberliegenden Rahmenabschnitten des Fahrrads angeordnete Hinterradnabe, einen drehbar auf der Hinterradnabe angebrachten Antreiber und eine drehfest mit dem Antreiber gekoppelte oder koppelbare Mehrfachritzelanordnung mit wenigstens 11 Ritzeln mit sich unterscheidenden Zähnezahlen.

Jedes Ritzel weist im Bereich seiner Zähne eine Innenseitenfläche und eine Außenseitenfläche sowie eine zwischen der Innenseitenfläche und der Außenseitenfläche liegende, orthogonal zur Hinterradnabe verlaufende Ritzelmittelebene auf. Zur Definition der genannten Flächen und Ebene wird auf die vorstehenden Ausführungen verwiesen.

Im Zusammenbauzustand der Hinterradbaugruppe und dieser an dem Fahrradrahmen ist eine vierte Distanz in axialer Richtung von der Außenseitenfläche des Ritzels mit der kleinsten Zähnezahl zu einer Umfangsfläche am hinteren Ausfallende des Fahrradrahmens, die der Hinterradbaugruppe benachbart und dieser am nächsten ist, kleiner als 8,2 mm, bevorzugt 7,2 +/- 0,2 mm, wenn die Hinterradbaugruppe einen Antreiber des ersten Antreiber-Typs umfasst. Umfasst die Hinterradbaugruppe einen Antreiber des zweiten Antreiber-Typs, dann ist die vierte Distanz kleiner als 8,7 mm, bevorzugt 7,7 +/- 0,2 mm. Umfasst die Hinterradbaugruppe einen Antreiber des dritten Antreiber-Typs, dann ist die vierte Distanz kleiner als 8,35 mm, bevorzugt 7,35 +/- 0,15 mm. Die vorstehenden Distanzen ermöglichen für die genannten Antreiber eine effektive Ausnutzung der der Hinterradbaugruppe zur Verfügung stehenden Einbaubreite.

Alternativ oder zusätzlich ist gemäß einem Erfindungsaspekt im Zusammenbauzustand der Hinterradbaugruppe mit dem Fahrradrahmen eine fünfte Distanz in axialer Richtung von der Außenseitenfläche des Ritzels mit der kleinsten Zähnezahl zu einer vertieften Fläche am hinteren Ausfallende des Fahrradrahmens, die der Hinterradbaugruppe benachbart ist und orthogonal zur Hinterradnabe verläuft, kleiner als 12,2 mm, bevorzugt 11,2 +/- 0,2 mm, wenn die Hinterradbaugruppe einen Antreiber des ersten Antreiber-Typs umfasst. Umfasst die Hinterradbaugruppe einen Antreiber des zweiten Antreiber-Typs, dann ist die fünfte Distanz kleiner als 12,7 mm, bevorzugt 11,7 +/- 0,2 mm. Umfasst die Hinterradbaugruppe einen Antreiber des dritten Antreiber-Typs, dann ist die fünfte Distanz kleiner als 11,5 mm, bevorzugt 10,55 +/-0,15 mm.

Die vorstehend eingeführte vierte und fünfte Distanz ermöglichen eine Hinterradbaugruppe, die den zur Verfügung stehenden Bauraum (Einbaubreite) optimal ausnutzt. Hierfür ist die Mehrfachritzelanordnung möglichst weit nach axial außen verlagert und rückt somit näher zu dem Rahmenausfallende hin. Es versteht sich, dass bei entsprechender Anordnung des angetriebenen vorderen Kettenblattes bzw. Kettenrades des Fahrrads auf diese Weise auch ein Kettenschräglauf verringert werden kann.

Gemäß einer Weiterbildung der Erfindung ist im Zusammenbauzustand der Hinterradbaugruppe mit dem Fahrradrahmen eine sechste Distanz zwischen der Außenseitenfläche des Ritzels mit der kleinsten Zähnezahl und einer/der Nabenendkappe definiert und ist ein Raumfaktor, der sich aus dem Quotienten der fünften Distanz und sechsten Distanz ergibt, kleiner als 3 und größer als 2,2, bevorzugt zwischen 2,7 und 2,4, noch bevorzugter 2,5. Die sechste Distanz ist beispielsweise 4,2 mm +/- 0,2 mm.

Ferner kann ein Schaltauge an dem hinteren Ausfallende des Fahrradrahmens montiert oder montierbar sein. Ein Schaltauge dient als Schutz vor Beschädigung des hinteren Schaltwerks und des Rahmens im Falle einer Krafteinwirkung auf das hintere Schaltwerk, beispielsweise bei einem Sturz. In einer Weiterbildung der Erfindung kann das am Ausfallende des Fahrradrahmens montierte Schaltauge im Zusammenbauzustand der Hinterradbaugruppe mit dem Fahrradrahmen die Nabenendkappe kontaktieren, sodass es an einer Position gehalten ist, bei der eine Hinterradachse durch das Schaltauge und die Hinterradnabe geführt werden kann. Das Schaltauge kann ferner eine Struktur aufweisen, die als Positionierungshilfe für die Hinterradnabe dient.

### Verfahren zur Montage einer Hinterradbaugruppe

Die Erfindung betrifft ferner ein Verfahren zur Montage einer Hinterradbaugruppe. Ein solches Verfahren zur Montage einer Hinterradbaugruppe kann die folgenden Schritte umfassen: den Schritt eines Verbindens von mindestens zwei Ritzeln mit den kleinsten Zähnezahlen einer Mehrfachritzelanordnung miteinander, den Schritt eines Verbindens der mindestens zwei verbundenen Ritzel mit einer Verschlussschraube, sodass die mindestens zwei Ritzel drehbar um eine Mittelachse der Verschlussschraube gelagert sind, den Schritt eines Befestigens der Verschlussschraube an einem Antreiber, indem ein Außengewinde der Verschlussschraube in ein Innengewinde des Antreibers eingreift, den Schritt eines Ausrichtens der zwei verbundenen Ritzel gegenüber Ritzeln mit größeren Zähnezahlen, die mit einem Antreiber verbunden sind, und den Schritt eines Fixierens der zwei ausgerichteten verbundenen Ritzel an einem mit dem Antreiber verbundenen Ritzel durch Befestigungsmittel.

Sämtliche Merkmale der Mehrfachritzelanordnungen und der Hinterradbaugruppe der vorstehend erläuterten Erfindungsaspekte und Ausführungsformen können miteinander kombiniert werden.

### Figurenbeschreibung

Im Folgenden werden beispielhafte Ausführungsformen der Erfindung anhand der beigefügten schematischen Zeichnungen näher erläutert. Es stellen dar:
- Figur 1: eine perspektivische Ansicht auf eine zwischen zwei Rahmenabschnitten angeordnete Hinterradbaugruppe gemäß einer Ausführungsform der Erfindung und ein an einem der Rahmenabschnitte angeordnetes hinteres Schaltwerk;
- Figuren 2a-b: eine jeweilige Schnittansicht auf eine Hinterradbaugruppe gemäß einer Ausführungsform der Erfindung, die an einer zwischen zwei Rahmenabschnitten angebrachten Hinterradnabe befestigt ist;
- Figur 3: eine Ansicht von hinten auf eine Hinterradbaugruppe, die eine Mehrfachritzelanordnung gemäß einer ersten Ausführungsform der Erfindung und einen ersten Antreiber-Typ umfasst;
- Figuren 4a-b: eine Seitenansicht der am Rahmen befestigten Hinterradbaugruppe gemäß Figur 3 (Figur 4a) und eine Seitenansicht des in Figur 3 dargestellten Schaltauges (Figur 4b);
- Figuren 5a-c: den ersten Antreiber-Typ der Hinterradbaugruppe im Querschnitt (Figur 5a) in einer Frontansicht (Figur 5b) und als perspektivische Ansicht (Figur 5c), der mit der Mehrfachritzelanordnung gemäß der ersten Ausführungsform der Erfindung koppelbar ist;
- Figur 6: eine Schnittansicht der Hinterradbaugruppe gemäß Figur 3;
- Figuren 7a-b: eine Schnittansicht durch eine Hinterradbaugruppe, die eine Mehrfachritzelanordnung gemäß einer zweiten Ausführungsform der Erfindung und einen zweiten Antreiber-Typ umfasst;
- Figuren 8a-b: einen zweiten Antreiber-Typ der Hinterradbaugruppe in einer Seitenansicht (Figur 8a) und in einer Frontansicht (Figur 8b) für eine Hinterradbaugruppe;
- Figur 9: eine vergrößerte Ansicht der in Figur 7a dargestellten Hinterradbaugruppe angebracht an einem Rahmenausfallende;
- Figur 10: eine Schnittansicht durch eine Hinterradbaugruppe, die eine Mehrfachritzelanordnung gemäß einer dritten Ausführungsform der Erfindung und einen dritten Antreiber-Typ umfasst;
- Figuren 11a-b: eine Schnittansicht durch eine Hinterradbaugruppe, die eine Mehrfachritzelanordnung gemäß einer dritten Ausführungsform der Erfindung und einen dritten Antreiber-Typ umfasst (Figur 11a), sowie einen vergrößerten Ausschnitt der Hinterradbaugruppe (Figur 11b);
- Figuren 12a-b: eine Schnittansicht durch eine Hinterradbaugruppe, die eine Mehrfachritzelanordnung gemäß einer dritten Ausführungsform der Erfindung und einen dritten Antreiber-Typ umfasst (Figur 12a), sowie einen vergrößerten Ausschnitt der Hinterradbaugruppe (Figur 12b);
- Figuren 13a-d: einen Aufnahmekörper des dritten Antreiber-Typs in einer perspektivischen Ansicht (Figur 13a), einer Frontansicht (Figur 13b) sowie in zwei unterschiedlichen Schnittdarstellungen (Figuren 13c und 13b) gemäß den in Figur 13b dargestellten Schnittlinien;
- Figuren 14a-b: eine Hinterradbaugruppe, bei welcher eine Mehrfachritzelanordnung gemäß der vierten Ausführungsform der Erfindung an dem dritten Antreiber-Typ angebracht ist (Figur 14a), sowie einen vergrößerten Ausschnitt der Hinterradbaugruppe (Figur 14b);
- Figuren 15a-b: einen Ketten-Abwurfschutz in perspektivische Ansicht (Figur 15a) und im Querschnitt mit daran angeordneten Ritzeln (Figur 15b).

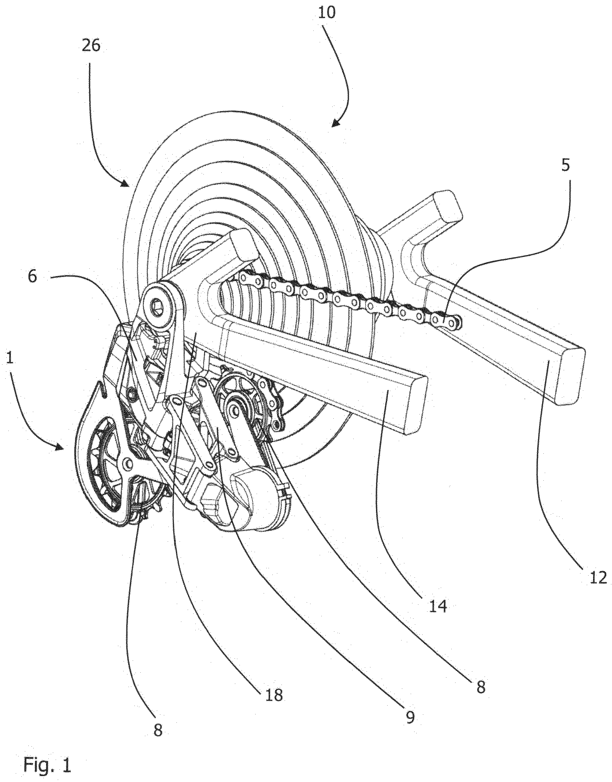

Figur 1 zeigt eine perspektivische Ansicht auf eine Hinterradbaugruppe 10, die zwischen zwei Rahmenabschnitten 12, 14 angeordnet ist, wobei ein an einem der Rahmenabschnitte 14 angeordnetes hinteres Schaltwerk 1 in Eingriff mit einer Fahrradkette 5 steht. Ein B-Knuckle 6 zur Fixierung des hinteren Schaltwerks 1 umgreift ein Rahmenausfallende 18 des Rahmenabschnitts 14 und ist an diesem mittels einer Steckachse 7 fixiert, die in diesem Rahmenausfallende 18 sowie einem Rahmenausfallende des anderen Rahmenabschnitts 12 aufgenommen ist. An dem B-Knuckle 6 ist ein P-Knuckle 9 schwenkbar angebracht, wobei ein Schwenken des P-Knuckle 9 wenigstens dessen axiale Position gegenüber dem B-Knuckle 6 verändert.

Die Hinterradbaugruppe 10 umfasst einen Antreiber 16 (nicht gezeigt) und eine Mehrfachritzelanordnung 26. Der Übersichtlichkeit halber sind in Figur 1 die Ritzel der Mehrfachritzelanordnung 26 lediglich schematisch unter Verdeutlichung der jeweiligen Außenumfänge der Ritzel dargestellt. In der Darstellung von Figur 1 steht die Fahrradkette 5, die von einem nicht dargestellten vorderen antreibenden Kitzel angetrieben wird, mit einem Ritzel der Mehrfachritzelanordnung 26 sowie mit zwei Kettenrollen 8 des hinteren Schaltwerks 1 in Eingriff. Es versteht sich, dass ein Schwenken des hinteren Schaltwerks 1, insbesondere des P-Knuckle 9, die Position der Fahrradkette 5 gegenüber den Ritzeln verändert, sodass die Fahrradkette 5 in ein benachbartes nächstes oder übernächstes Ritzel eingreifen kann.

### Allgemeine Erläuterungen zu den Figuren

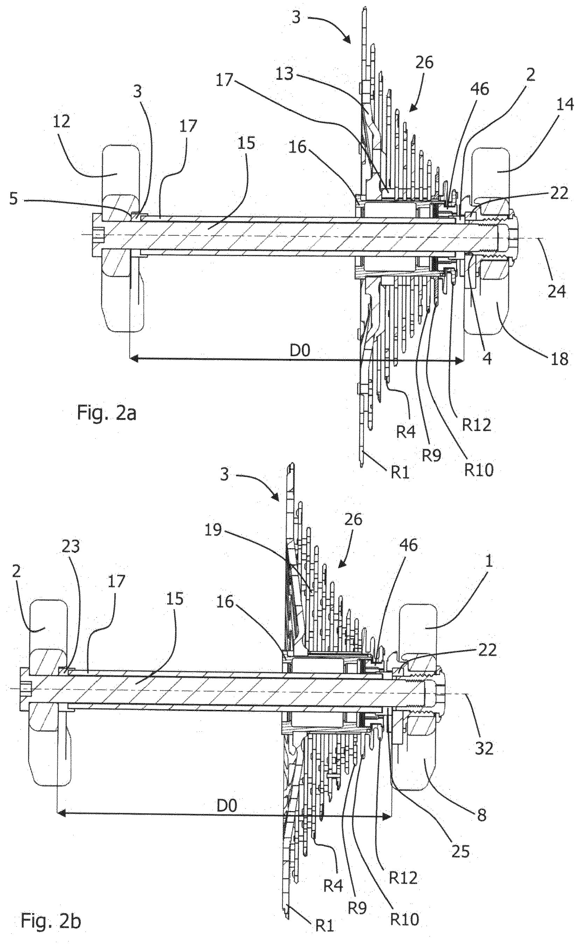

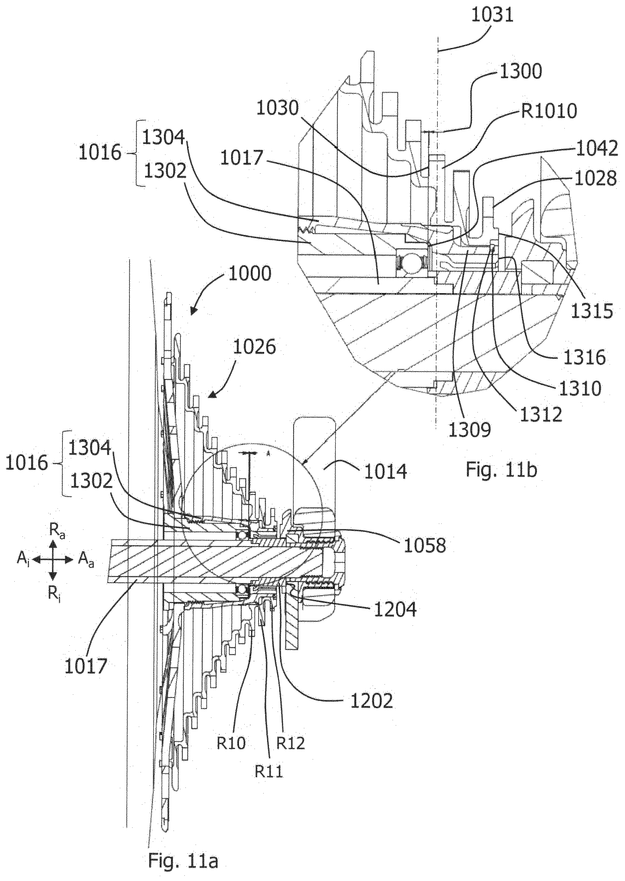

In den Figuren sind Hinterradbaugruppen 10, 100, 1000 mit Mehrfachritzelanordnungen 26; 126; 1026 verschiedener Ausführungsbeispiele dargestellt, die für ein Fahrrad mit Kettenschaltung vorgesehen sind. Jede Hinterradbaugruppe 10, 100, 1000 umfasst eine zwischen zwei gegenüberliegenden Rahmenabschnitten 12, 112, 1012; 14, 114, 1014 anordenbare Hinterradnabe 17, 1017 (siehe Figuren 2a-b, 11a-b) und einen drehbar auf der Hinterradnabe angebrachten Antreiber 16, 116, 1016. Der Antreiber ist zwischen dem Rahmenabschnitt 14, 114, 1014, vorzugsweise dessen Ausfallende 18, 118, 1018, und einer Fahrradmittelebene 20, 120, 1020 angeordnet. Zur Festlegung der Fahrradmittelebene 20, 120, 1020 werden die beiden Rahmenabschnitte 12, 112, 1012; 14, 114, 1014 als Bezugspunkte verwendet, wobei die Fahrradmittelebene 20, 120, 1020 mittig zwischen diesen und orthogonal zu der Hinterradnabe 17, 1017, beispielsweise deren Dreh- bzw. Längsachse, verläuft. Durch die Hinterradnabe 17, 1017 ist zur Befestigung dieser an dem Fahrradrahmen eine Hinterradachse 15, 115, 1015 geführt. Die Hinterradachse 15, 115, 1015 ist eine Steckachse, die für eine Mehrfachritzelanordnung mit mehr als 11 Ritzeln ausgelegt ist.

In dieser Anmeldung verwendete axiale Richtungsangaben beziehen sich auf die Fahrradmittelebene 20, 120, 1020 und den Rahmenabschnitt 14, 114, 1014. Eine Richtung nach axial innen Aᵢ ist definiert als die Richtung zu der Fahrradmittelebene 20, 120, 1020, wohingegen eine Richtung nach axial außen Aₐ definiert ist als die Richtung zu dem Rahmenabschnitt 14, 114, 1014 hin. Die axialen Richtungen Aᵢ und Aₐ sind folglich entgegengesetzt zueinander. Wird hingegen von einer Richtung nach radial außen Rₐ gesprochen, dann ist dies eine Richtung, die von einer Drehachse 24, 124, 1024 der Mehrfachritzelanordnung 26, 126, 1026 weg weist. Eine Richtung nach radial innen Rᵢ ist der Richtung nach radial außen Rₐ entgegengesetzt und ist eine Richtung zu der Drehachse 24, 124, 1024 des Mehrfachritzelanordnung 26, 126, 1026 hin. Die Drehachse 24, 124, 1024 der Mehrfachritzelanordnung 26, 126, 1026 verläuft parallel zu der Hinterradnabe 17, 1017 und fällt mit der Dreh- bzw. Längsachse der Hinterradnabe 17, 1017 zusammen.

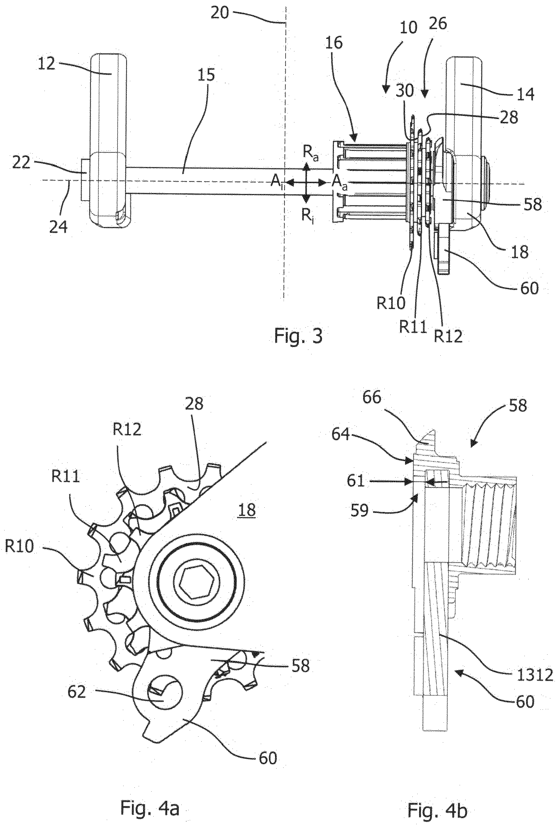

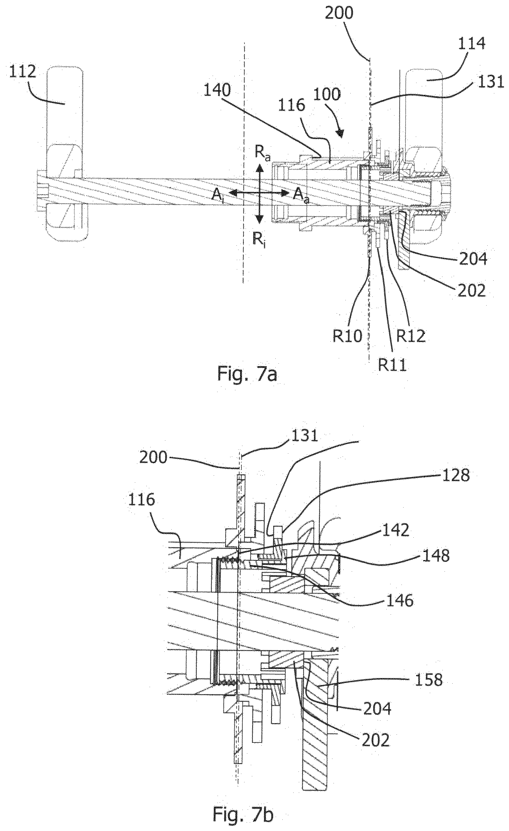

Ferner weist jede der in den Figuren dargestellten Hinterradbaugruppen 10, 100, 1000 eine drehfest mit dem Antreiber 16, 116, 1016 gekoppelte oder koppelbare Mehrfachritzelanordnung 26, 126, 1026 mit wenigstens 11 Ritzeln R1-R11 auf, die sich in ihren Zähnezahlen voneinander unterscheiden. Jedes Ritzel weist im Bereich seiner Zähne eine Innenseitenfläche 28, 128, 1028 und eine Außenseitenfläche 30, 130, 1030 sowie eine zwischen der Innenseitenfläche 28, 128, 1028 und der Außenseitenfläche 30, 130, 1030 liegende, orthogonal zur Hinterradnabe verlaufende Ritzelmittelebene 31, 131, 1031 auf. Die Außenseitenflächen 28 der Ritzel mit den drei kleinsten Zähnezahlen sind beispielsweise in der Seitenansicht von Figur 4a ersichtlich. Die Ritzelmittelebene 31, 131, 1031, wie am besten in Figur 7b verdeutlicht, kann durch die Mitte des jeweiligen Ritzels verlaufen, also mittig zwischen der Innenseitenfläche 28, 128, 1028 und der Außenseitenfläche 30, 130, 1030 definiert sein.

Figuren 2a-b stellen die Mehrfachritzelanordnung 26 mit zwölf Ritzeln R1-R12 anhand von zwei unterschiedlich ausgebildeten Mehrfachritzelanordnungen 26 dar. Figur 2a zeigt eine Mehrfachritzelanordnung 26, bei der die vier größten Ritzel R1-R4 mit einem Spider 13 verbunden sind, so dass das Drehmoment über den Spider 13 auf den Antreiber 16 übertragen wird. Bei dieser platzsparenden Ausführung sind die vier größten Ritzel radial von dem Antreiber 16 beabstandet. Die sechs mittleren Ritzel R4-R9 sind jeweils mit Spacern 17 axial voneinander beabstandet und greifen direkt drehmomentübertragend in den Antreiber 16 ein. Die beiden kleinsten Ritzel R11, R12 sind mit einer Verschlussschraube 46 über das drittkleinste Ritzel R10 drehmomentübertragend mit dem Antreiber 16 verbunden.

Figur 2b zeigt eine alternative Mehrfachritzelanordnung 26, bei der die Ritzel mit Pins/Bolzen 19 miteinander verbunden sind. Nur das größte Ritzel R1 ist drehmomentübertragend mit dem Antreiber 16 verbunden, reicht also radial bis zum Antreiber 16. Die übrigen Ritzel R2-R12 sind radial von dem Antreiber 16 beabstandet. Die drei kleinsten Ritzel sind einstückig ausgebildet, z.B. miteinander verschweißt, und über das drittkleinste Ritzel R10 mit dem Antreiber 16 drehmomentübertragend verbunden, und über die Verschlussschraube 46 axial fixiert.

Ferner zeigen Figuren 2a-b die für die an der Hinterradnabe 17 zu befestigenden Komponenten zur Verfügung stehende Einbaubreite D0, die mindestens 142 mm beträgt. Die Einbaubreite ist der Abstand von einer dem Rahmenabschnitt 12 benachbarten Außenseite 5 einer linken Nabenendkappe 3 bis zu einer dem Rahmenabschnitt 14 benachbarten Außenseite 4 der rechten Nabenendkappe 2.

### Erstes Ausführungsbeispiel

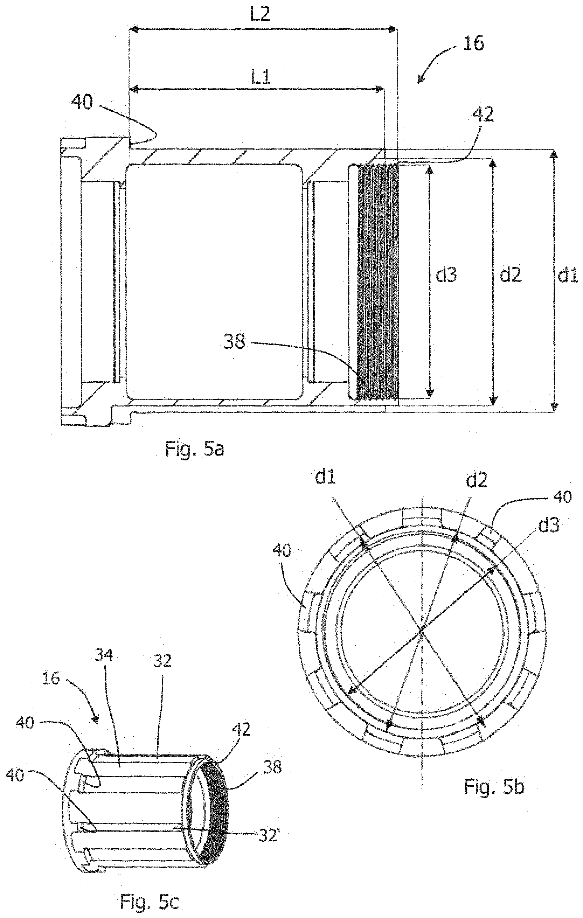

In den Figuren 2, 3 und 6 ist eine Hinterradbaugruppe 10 mit einer Mehrfachritzelanordnung gemäß der ersten Ausführungsform der Erfindung dargestellt. Die Hinterradbaugruppe 10 umfasst einen im Folgenden als erster Antreiber-Typ 16 bezeichneten Antreiber, der in Fachkreisen aufgrund seiner weiten Verbreitung auch als "Standardantreiber" bezeichnet wird. Der erste Antreiber-Typ 16 ist in Figuren 5a-c als separates Bauteil unter Kennzeichnung ausgewählter charakteristischer Abmessungen dargestellt. Er weist auf seiner radial äußeren Umfangsfläche ein Mitnehmerprofil 32 auf, das sich von einer Basisfläche 34 nach radial außen erhebt. Das Mitnehmerprofil 32 kann Mitnehmervorsprünge oder sogenannte Splines umfassen. Wenigstens einer der Splines 32' unterscheidet sich in seinen Abmessungen von den übrigen Splines des Profils 32. In der Regel weisen an dem Antreiber 16 zu befestigende Ritzel eine Innenkontur auf, die zu dem Mitnehmerprofil 32 des Antreibers 16 komplementär ausgebildet sind. Auf diese Weise können Ritzel mit entsprechender Innenkontur und der Antreiber 16 drehmomentübertragend in Eingriff gelangen.

Beispielsweise kann der Antreiber 16 das Mitnehmerprofil an einem ersten Bereich seiner radialen Außenfläche aufweisen, der sich entlang einer ersten axialen Länge L1 von einem Antreiberanschlag 40 nach axial außen Aₐ erstreckt. Als Antreiberanschlag wird - übergreifend für alle Ausführungsbeispiele - allgemein ein Abschnitt des Antreibers 16, 116, 1016 bezeichnet, an dem die daran befestigte Mehrfachritzelanordnung 26, 126, 1026 anschlägt und durch den die Position der Mehrfachritzelanordnung 26, 126, 1026 gegenüber dem Antreiber 16, 116, 1016 festlegbar ist. Diese erste axiale Länge L1 des ersten Antreiber-Typs ist vorzugsweise größer als 32,9 mm, bevorzugt 33,2 +/- 0,2 mm. Ein Außendurchmesser d1 in diesem ersten Bereich, gemessen an radialen Außenflächen des Mitnehmerprofils 32, 32' ist vorzugsweise größer als 34,2 mm, bevorzugt 34,5 +/- 0,15 mm.

Wie in Figuren 5a-c ersichtlich, schließt sich an den ersten Bereich mit dem Mitnehmerprofil 32 ein relativ kurzer zweiter Bereich an, bei dem die radiale Außenfläche des Antreibers 16 frei von dem Mitnehmerprofil und damit glatt ist. Eine zweite axiale Länge L2 des Antreibers 16 erstreckt sich von dem Antreiberanschlag 40 bis zu einer axial äußeren Stirnseite 42 des Antreibers 16 und ist zwischen 34,5 mm und 35,9 mm, jedoch bevorzugt 34,9 +/- 0,3 mm. Ein Außendurchmesser d2 des zweiten Bereichs kann größer als 31,4 mm sein und ist bevorzugt 32,1 +/- 0,2 mm.

Ferner weist der Antreiber 16 benachbart zu seiner axial äußeren Stirnseite 40 ein nach radial innen weisendes Innengewinde 38 auf. Das Innengewinde 38 hat vorzugsweise einen Nenndurchmesser d3, von kleiner als 29,8 mm und bevorzugt von in etwa 30,6 mm. Eine bevorzugte Steigung des Innengewindes des Antreibers ist 24 TPI, sodass das Gewinde auch nach bekannter Bemaßung als M 30,6 x 24 TPI charakterisiert werden kann.

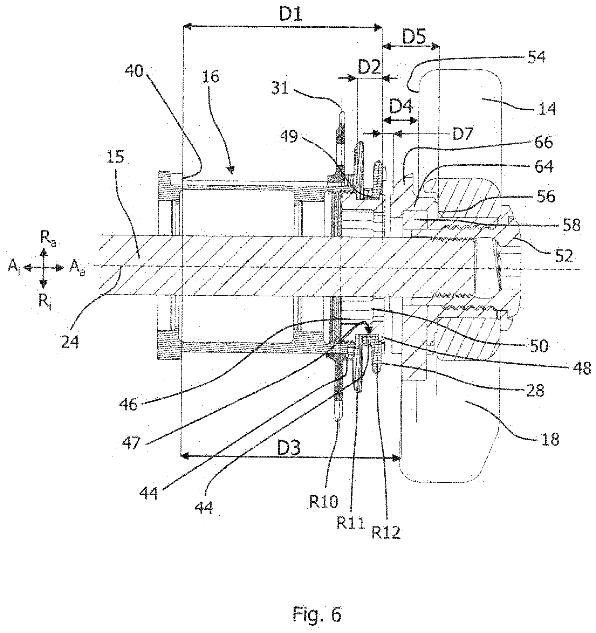

Wie in Figur 6 ersichtlich, können bei der Hinterradbaugruppe 10 mehrere Ritzel der Mehrfachritzelanordnung 26 nicht nur im Bereich des Außenumfangs des ersten Antreiber-Typs 16 angebracht sein, sondern auch axial außerhalb des ersten Antreibers 16, also axial vor dem Antreiber 16. Dadurch ergibt sich gemäß Figur 6 eine erste Distanz D1 in axialer Richtung von dem Antreiberanschlag 40 bis zu der Außenseitenfläche 28 des kleinsten Ritzels R12, die größer als 38,0 mm ist. Es versteht sich, dass die zur Verfügung stehende Einbaubreite zur Anordnung einer möglichst großen Anzahl an Ritzeln am besten nutzbar ist, wenn diese erste Distanz D1 möglichst groß ist, beispielsweise größer als 39,1 mm oder noch besser 39,9 +/- 0,2 mm ist.

In der in Figur 6 dargestellten Ausführungsform sind zwei Ritzel R12, R11 mit den kleinsten Zähnezahlen axial vor dem ersten Antreiber-Typ 16 angeordnet. Diese beiden Ritzel weisen einen Innendurchmesser auf, der kleiner ist als ein Außendurchmesser des Antreibers 16. Darüber hinaus ist der Innendurchmesser der kleineren Ritzel R12, R11 auch kleiner als der Nenndurchmesser d3 des Innengewindes des Antreibers 16. Mit den beiden außerhalb des Antreibers 16 angeordneten Ritzeln R12, R11 ergibt sich eine zweite Distanz D2 in axialer Richtung von der axial äußeren Stirnseite 42 des ersten Antreiber-Typs 16 zu einer Außenseitenfläche 28 des Ritzels R12 mit der kleinsten Zähnezahl. Diese zweite Distanz D2 ist größer als 4,0 mm und ist bevorzugt 5,0 +/- 0,2 mm.

Die zwei vor dem bzw. axial außerhalb des ersten Antreiber-Typs 16 angeordneten Ritzel R12, R11 sind radial freitragend ausgeführt, jedoch mit einem weiteren Ritzel R10 der Mehrfachritzelanordnung 26 verbunden. Das heißt, die freitragend ausgeführten Ritzel R12, R11 stützen sich selbst nicht an ihrem radialen Innenumfang ab, sondern sind mit einem am ersten Antreiber-Typ radial abgestützten Ritzel R10 verbunden, das in das Mitnehmerprofil 32 am Außenumfang des ersten Antreiber-Typs 16 eingreift. Zur Verbindung der freitragenden zwei kleinsten Ritzel R12, R11 miteinander und dieser mit dem benachbarten, am Antreiber 16 befestigten Ritzel R10 sind Verbindungsmittel 44 vorgesehen, die sich zwischen den Ritzeln und parallel zur Hinterradnabe bzw. parallel zur Drehachse 24 der Mehrfachritzelanordnung 26 erstrecken. Die Verbindungsmittel 44 sind im Bereich eines Fußkreises der Ritzel angebracht, wie in Figur 6 ersichtlich. Bei dem Verbindungsmittel 44 kann es sich um einen Flansch oder ein anderes ringförmiges Befestigungselement handeln. Auch Haltebolzen, die mit zwei benachbarten Ritzeln verbunden sind, können alternativ als Verbindungsmittel 44 verwendet werden.

Die zwei radial freitragend angeordneten Ritzel R12, R11 sind mittels eines Verschlusselements axial fixiert. In Figur 6 ist das Verschlusselement als Verschlussschraube 46 dargestellt, die in dem montierten Zustand mit einem an ihrem Außenumfang angeordneten Außengewinde in das Innengewinde des ersten Antreiber-Typs 16 eingreift. Ferner umfasst die in Figur 6 dargestellte Verschlussschraube 46 an ihrer nach axial außen weisenden Stirnseite eine Auskragung 48. Die Auskragung 48 ist dazu eingerichtet, an einer Stirnfläche des kleinsten Ritzels R12 anzuliegen und eine auf diese Ritzel R12, R11 ausgeübte Kraft in axialer Richtung aufzunehmen. Genauer gesagt, wird eine nach axial außen Rₐ wirkende Kraft durch die Auskragung 48 des Verschlusselements 46 aufgenommen. Das Verschlusselement 46 fixiert somit die zwei freitragenden Ritzel R12, R11 axial. Die Auskragung 48 greift für eine platzsparende Anordnung in eine Aussparung 49 in dem kleinsten Ritzel R12 derart ein, dass die Auskragung 49 bündig mit der Außenseitenfläche 28 des kleinsten Ritzels R12 abschließt oder maximal 2 mm, bevorzugt maximal 0,9 mm, von dieser hervorsteht.

Für ein einfaches Einschrauben der Verschlussschraube 46 in den Antreiber 16 weist diese im Bereich ihres Innenumfangs eine Werkzeugschnittstelle 50 auf.

Das Verschlusselement 46 ist dazu eingerichtet, eines oder beide der zwei kleinsten Ritzel aufzunehmen. Dazu weist das Verschlusselement 46 einen Bereich 47 zur Ritzelaufnahme auf, der als Hinterschnitt ausgebildet ist und einen verkleinertem Außendurchmesser aufweist. Der Außendurchmesser des Hinterschnitts ist kleiner als ein Außendurchmesser des ersten Antreiber-Typs 16. Das oder die im Bereich des Hinterschnitts aufgenommenen Ritzel können somit einen Innendurchmesser aufweisen, der es beispielsweise ermöglicht, Ritzel mit 10 Zähnen und einem entsprechend kleinen Fußkreis aufzunehmen. Unter einem Hinterschnitt wird hierin verstanden, dass ein Bereich vorhanden ist, dessen Außenumfangsfläche durch zwei axiale Anschläge mit größerem Durchmesser begrenzt ist.

Die zwei freitragenden Ritzel R12, R11 sind über das Verbindungsmittel 44' miteinander verbunden. Es kann sich um eine lösbare Verbindung handeln oder um eine Fügeverbindung, die beispielsweise lediglich unter Zerstörung wieder lösbar ist. Die zwei freitragenden Ritzel R12, R11 können bei der Montage des Verschlusselements 46 um eine Mittelachse des Verschlusselements 44' drehbar sein. D.h. ein Einschrauben des Verschlusselements 48 in den ersten Antreiber-Typ 16 kann unabhängig von einer Drehorientierung der Ritzel R12, R11 erfolgen. Dies ermöglicht es, die freitragenden Ritzel R12, R11 erst dann gegenüber dem auf dem ersten Antreiber-Typ 16 aufgenommenen Ritzel R10 zu befestigen, wenn die gewünschte Drehorientierung festgelegt ist.

Es versteht sich, dass eine Möglichkeit zur Aufnahme der freitragenden Ritzel R12, R11 an dem Verschlusselement 48 mit Hinterschnitt bereitzustellen ist, besonders wenn der Innendurchmesser der aufzunehmenden Ritzel R12, R11 dem Außendurchmesser des Bereichs 47 mit Hinterschnitt entspricht oder lediglich geringfügig größer ist. Hierzu kann beispielsweise das Verschlusselement 48 zweiteilig ausgeführt sein und erst nach Anordnung der freitragenden Ritzel R12, R11 in dem Bereich 47 mit Hinterschnitt verbunden werden, beispielsweise mittels einer Fügeverbindung oder einer Schraubverbindung. Alternativ kann das Verschlusselement 48 einen elastischen Bereich aufweisen, sodass die freitragenden Ritzel R12, R11 trotz Hinterschnitt des Verschlusselements 48 mittels des elastischen Bereichs zu dem Bereich 47 mit Hinterschnitt über den elastischen Bereich geschoben werden können. Alternativ ist ein additives Fertigungsverfahren, beispielsweise ein 3D-Druckverfahren erfindungsgemäß möglich.

Die vorstehend beschriebene Hinterradbaugruppe 10 ermöglicht somit eine Übertragung eines auf die freitragenden Ritzel R12, R11 ausgeübten Drehmoments auf den ersten Antreiber-Typ 16. Wird beispielsweise ein Drehmoment durch die Fahrradkette auf das kleinste Ritzel R12 ausgeübt, erfolgt eine Drehmomentübertragung von dem kleinsten Ritzel R12 über das Verbindungsmittel 44' zwischen dem kleinsten Ritzel R12 und dem zweitkleinsten Ritzel R11 zu dem zweitkleinsten Ritzel R11. Da auch das zweitkleinste Ritzel R11 keine direkte Verbindung zu dem ersten Antreiber-Typ 16 aufweist, wird das Drehmoment weiter über das Verbindungsmittel 44 zwischen dem zweitkleinsten Ritzel R11 und dem diesen benachbarten, mit dem ersten Antreiber-Typ 16 verbundenen Ritzel R10 auf den ersten Antreiber-Typ 16 übertragen. Es versteht sich, dass ein auf das zweitkleinste Ritzel R11 ausgeübtes Drehmoment ebenfalls über das Verbindungsmittel 44 zu dem mit dem ersten Antreiber-Typ 16 verbundenen Ritzel R10 und folglich auf den ersten Antreiber-Typ 16 übertragen wird.

Figur 6 zeigt in einer Teilschnittansicht die Hinterradbaugruppe 10 montiert auf der Fahrradnabe, die in dem Ausfallende 18 des Rahmenabschnitts 14 mittels einer Halterungsschraube 52 aufgenommen ist. Für eine optimale Ausnutzung des Bauraums, also der für die Hinterradbaugruppe 10 zur Verfügung stehenden Einbaubreite, ist eine vierte Distanz D4 in axialer Richtung von der Außenseitenfläche 28 des kleinsten Ritzels R12 zu einer Umfangsfläche 54 des Rahmenabschnitts 14 bzw. des hinteren Ausfallendes 18 des Fahrradrahmens möglichst kurz ausgeführt. Beispielsweise ist diese vierte Distanz D4 kleiner als 8,2 mm und bevorzugt 7,2 +/- 0,2 mm. In einigen Fällen weist der Rahmenabschnitt 14 bzw. dessen Ausfallende 18 eine vertiefte Fläche 56 auf, welche zur Aufnahme eines Schaltauges 58 dient. Um hinreichend Bauraum zur Montage des Schaltauges 58 zwischen dem Rahmenabschnitt 14 bzw. dessen Ausfallende 18 und der Hinterradbaugruppe 10 zur Verfügung zu haben, ist eine fünfte Distanz D5 in axialer Richtung von der Außenseitenfläche 28 des kleinsten Ritzels R12 zu der vertieften Fläche 56 an dem Rahmenabschnitt 14 bzw. dessen Ausfallende 18 kleiner als 12,2 mm und bevorzugt in etwa 11,2 +/- 0,2 mm.

Wie zuvor erwähnt, ist in dem angesprochenen Bereich axial zwischen dem kleinsten Ritzel R12 und dem Rahmenabschnitt 14 das Schaltauge 58 angeordnet. Das Schaltauge 58 ist dazu eingerichtet, ein hinteres Schaltwerk zu tragen. Zu diesem Zweck ist es an der Hinterradachse 15 befestigt und weist in einem ersten Bereich 60 ein Durchgangsloch 62 auf, das am besten in Figuren 4a-b ersichtlich ist und zur Befestigung des hinteren Schaltwerkes dient. Das in Figur 6 dargestellte Schaltauge 58 weist ferner einen zweiten Bereich 64 auf, der dem ersten Bereich 60 entgegengesetzt angeordnet ist. Der zweite Bereich 64 ist mit der Hinterradnabe verbunden und weist in der Darstellung von Figur 6 einen Vorsprung 66 auf, der dem kleinsten Ritzel R12 benachbart ist. Ferner weist das Schaltauge 58 eine Radeinbaunut 59 auf, die in Figur 4b verdeutlicht ist. Die Radeinbaunut 59 wird durch einen Versatz zwischen dem ersten Bereich 60 und dem zweiten Bereich 64 des Schaltauges 58 definiert. Die Radeinbaunut 59 weist eine Breite 61 zwischen 2 mm und 3 mm auf, bevorzugt von 2,5 +/- 0,2 mm auf. Der erste Bereich 60 kann aus einem thermoplastischen Kunststoff und der zweite Bereich 64 aus einem metallischen Material hergestellt sein. Die vorstehende Ausführung der Radeinbaunut 59 mit deren angegebener Breite 61 bietet eine Möglichkeit der Ausbildung der Mehrfachritzelanordnung, bei der das kleinste Ritzel an einer axial möglichst weit außen liegenden Richtung positionierbar ist. Folglich kann ein Kettenschräglauf reduziert und die Einbaubreite besonders effektiv genutzt werden.

Die angesprochene Radeinbaunut 59 kann somit dazu beitragen, dass eine siebte Distanz D7 zwischen der Außenseitenfläche 28 des kleinsten Ritzels R12 und einer diesem Ritzel zugewandten Fläche des Vorsprungs 66 des zweiten Bereichs 64 des Schaltauges 58 wenigstens 2,2 mm beträgt. Auf diese Weise kann ein hinreichender Freiraum zwischen dem Vorsprung 66 des Schaltauges 58 und einer mit dem kleinsten Ritzel R12 in Eingriff stehenden Kette bereitgestellt sein. Die siebte Distanz D7 sollte im Hinblick auf eine möglichst optimale Ausnutzung des zur Verfügung stehenden Bauraums jedoch kleiner sein als 3,2 mm.

### Zweites Ausführungsbeispiel

Im Folgenden wird eine Hinterradbaugruppe 100 mit einer Mehrfachritzelanordnung gemäß einer zweiten Ausführungsform der Erfindung beschrieben. Elemente, die bereits in Bezug auf die erste Ausführungsform beschrieben wurden und entsprechend in der zweiten Ausführungsform enthalten sind, sind mit um den Wert 100 erhöhten Bezugszeichen versehen und werden im Folgenden lediglich insoweit beschrieben, wie deren Ausgestaltung oder Funktion von den vorherigen Beschreibungen abweicht.

Die Hinterradbaugruppe 100 umfasst gemäß der zweiten Ausführungsform der Erfindung einen zweiten Antreiber-Typ 116, an dem im montierten Zustand wenigstens zwei Ritzel mit den kleinsten Zähnezahlen R12, R11 radial freitragend ausgeführt sind und über wenigstens ein weiteres Ritzel R10 mit größerer Zähnezahl mit dem zweiten Antreiber-Typ verbunden sind. Wie am besten in dem vergrößerten Ausschnitt von Figur 7b ersichtlich, sind die drei Ritzel R12, R11, R10 mit den kleinsten Zähnezahlen derart angeordnet, dass eine Ritzelmittelebene 131 des Ritzels R10 mit der drittkleinsten Zähnezahl im Bereich der axialen Stirnfläche 142 des zweiten Antreiber-Typs oder axial außerhalb des zweiten Antreiber-Typs verläuft. Zur Verdeutlichung des axialen Versatzes der Ritzelmittelebene 131 und der axialen Stirnfläche 142 des zweiten Antreiber-Typs 116 stellt die Linie 200 eine Verlängerung der axialen Stirnfläche 142 des zweiten Antreiber-Typs 116 dar.

Die Hinterradbaugruppe 100 weist ebenfalls ein Verschlusselement 146 auf, das dem Verschlusselement 46 gemäß der ersten Ausführungsform ähnelt. Wie in Figur 7b ersichtlich, ist das Verschlusselement als Verschlussschraube 146 mit einem Außengewinde zum Eingriff in ein Innengewinde des zweiten Antreiber-Typs und einer Auskragung 148 versehen. Auch wenn in Figur 7b die Auskragung 148 axial außerhalb des kleinsten Ritzels R12 dargestellt ist, kann in einer alternativen Ausführung das kleinste Ritzel R12 an dem Übergang zwischen seiner axial äußeren Stirnseite und seiner Innenumfangsfläche eine Aussparung aufweisen, in die die Auskragung 148 der Verschlussschraube 146 eingreifen kann.

In der in Figuren 7a-b dargestellten Ausführungsform ist ein Innendurchmesser des Ritzels R12 mit der kleinsten Zähnezahl gleich einem Innengewinde-Durchmesser (Nenndurchmesser) des Innengewindes des zweiten Antreiber-Typs 116, das zur Aufnahme des Verschlusselements 146 eingerichtet ist.

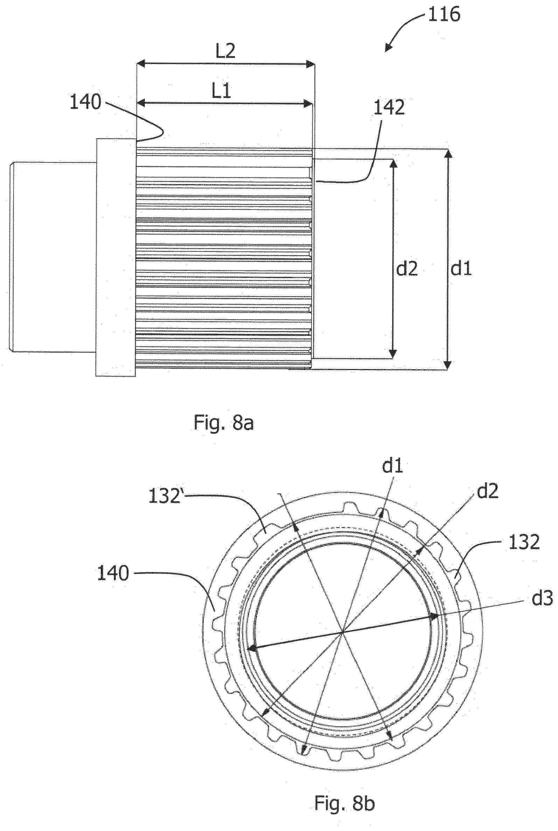

Der zweite Antreiber-Typ zeichnet sich durch seine geometrischen Abmessungen aus, die im Folgenden unter Bezugnahme auf die Figuren 8a-b näher erläutert werden.

Auch der zweite Antreiber-Typ 116 weist ein Mitnehmerprofil 132, 132' an einem ersten Bereich seiner radialen Außenumfangsfläche auf, das sich entlang einer ersten axialen Länge L1 von einem Antreiberanschlag 140 nach axial außen Aₐ erstreckt. Diese erste axiale Länge L1 ist größer als 24,7 mm und ist bevorzugt 25,7 +/- 0,2 mm. Ein Außendurchmesser d1 in diesem ersten Bereich, gemessen an radialen Außenflächen des Mitnehmerprofils 32, 32' ist vorzugsweise größer als 31,6 mm und ist bevorzugt 32,6 +0,05/-0,1 mm.

Wie in Figur 8a ersichtlich, schließt sich an den ersten Bereich mit Mitnehmerprofil 32, 32' ein zweiter Bereich an, bei dem die radiale Außenfläche des zweiten Antreiber-Typs frei von dem Mitnehmerprofil ist. Eine zweite axiale Länge L2 des zweiten Antreiber-Typs 116 erstreckt sich von dem Antreiberanschlag 140 bis zu einer axial äußeren Stirnseite 142 des zweiten Antreiber-Typs 116 und ist zwischen 25 mm und 27 mm, jedoch bevorzugt 26,0 +/- 0,2 mm. Ein Außendurchmesser d2 des zweiten Bereichs kann größer als 31,4 mm sein und ist bevorzugt 29,5 +/- 0,1 mm.

Auch die erfindungsgemäße Mehrfachritzelanordnung 126 nutzt den ihr zur Verfügung stehenden Bauraum, also die in Figuren 2a-b dargestellte Einbaubreite, in gegenüber dem Stand der Technik vorteilhafter Weise. Dazu sind, wie bereits beschrieben, Ritzel R12, R11, R10 axial vor dem zweiten Antreiber-Typ angeordnet. Es ergibt sich eine erste Distanz D1 in axialer Richtung von dem Antreiberanschlag 140 bis zu der Außenseitenfläche 128 des kleinsten Ritzels R12 von größer als 34 mm und bevorzugt von 35,0 +/- 0,2 mm.

Gemäß der zweiten Ausführungsform der Erfindung ist eine zweite Distanz D2 in axialer Richtung von der axial äußeren Stirnseite 42 des zweiten Antreiber-Typs zu einer Außenseitenfläche 128 des Ritzels R12 mit der kleinsten Zähnezahl größer als 4,0 mm und bevorzugt 5,0 +/- 0,2 mm.

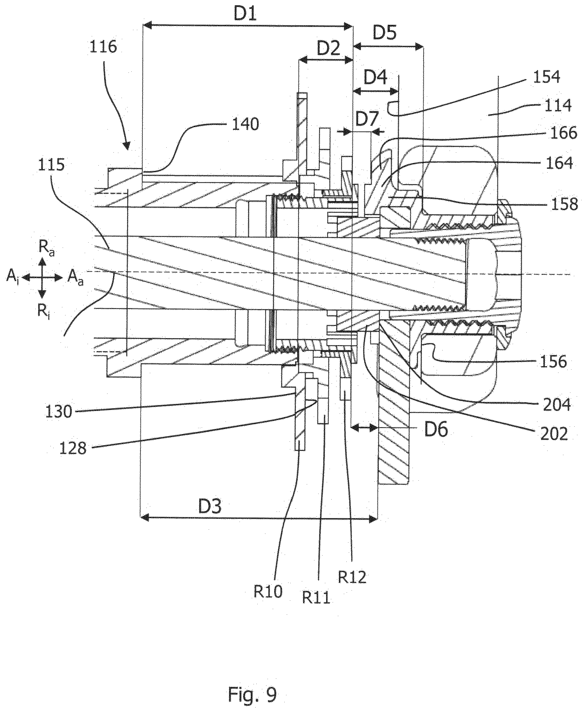

Figur 9 zeigt die Hinterradbaugruppe 100 montiert an der Fahrradnabe, die in dem Ausfallende 118 des Rahmenabschnitts 114 mittels einer Halterungsschraube 152 aufgenommen ist. Zum Einstellen des axialen Nabenspiels ist eine Nabenendkappe 202 vorgesehen, die an der Außenumfangsfläche der Fahrradnabe angeordnet ist und diese radial umlaufend einschließt. Eine dritte Distanz D3 zwischen dem Antreiberanschlag 140 und einer nach axial außen weisenden Stirnseite 204 der Nabenendkappe 202 kann in dem montierten Zustand größer als 38,1 mm sein und kann bevorzugt 39,7 +/- 0,2 mm sein.

Die Hinterradbaugruppe umfasst eine weitere Nabenendkappe 203, die benachbart zu dem antreiberferneren Rahmenabschnitt 112 an der Hinterradnabe angeordnet ist, wie in Figuren 2a-b ersichtlich. Eine Nabenendkappen-Distanz D0 zwischen axial äußeren Stirnseiten 204, 205 der Nabenendkappen kann mindestens 142 mm betragen, ist bevorzugt mindestens 148 mm und ist noch bevorzugter mindestens 157 mm. Die angesprochene Distanz D0 zwischen den axial äußeren Stirnseiten der Nabenendkappen wird - übergreifend für alle Ausführungsbeispiele - als Einbaubreite bezeichnet.

Für eine optimale Ausnutzung des Bauraums, also der für die Hinterradbaugruppe zur Verfügung stehenden Einbaubreite, ist eine vierte Distanz D4 in axialer Richtung von der Außenseitenfläche 128 des kleinsten Ritzels R12 zu einer Umfangsfläche 154 des Rahmenabschnitts 114 bzw. des hinteren Ausfallendes 118 des Fahrradrahmens möglichst klein ausgeführt. Beispielsweise ist diese vierte Distanz D4 kleiner als 8,7 mm und bevorzugt 7,7 +/- 0,2 mm. Ferner kann eine fünfte Distanz D5 in axialer Richtung von der Außenseitenfläche 128 des kleinsten Ritzels R12 zu der vertieften Fläche 156 an dem Rahmenabschnitt 114 bzw. dessen Ausfallende 118 kleiner als 12,7 mm und bevorzugt 11,7 +/- 0,2 mm sein. Zudem kann eine sechste Distanz D6 zwischen der Außenseitenfläche 128 des Ritzels R12 mit der kleinsten Zähnezahl und nach radial außen weisenden Stirnseite 204 der Nabenendkappe 4,7 +/- 0,2 mm sein.

Ein dem Schaltauge 58 gemäß der ersten Ausführungsform entsprechendes Schaltauge 158 ist zwischen dem Rahmenabschnitt 114 und dem zweiten Antreiber-Typ 116 angeordnet. Das Schaltauge 158 weist, wie in Bezug auf die erste Ausführungsform der Erfindung beschrieben, einen ersten Bereich 160 mit einem Durchgangsloch zur Montage des hinteren Schaltwerks sowie einen zweiten Bereich 164 mit einem dem kleinsten Ritzel R12 benachbarten Vorsprung 166 auf. Ferner weist das Schaltauge 158 die in Bezug auf die erste Ausführungsfrom angesprochene Radeinbaunut 59 mit einer Breite 61 zwischen 2,0 mm und 3,0 mm auf, bevorzugt von 2,5 +/-0,2 mm auf. Eine siebte Distanz D7 zwischen der Außenseitenfläche 128 des kleinsten Ritzels R12 und einer diesem Ritzel zugewandten Fläche des Vorsprungs 166 des zweiten Bereichs 164 des Schaltauges 158 kann wenigstens 2,7 mm betragen. Auf diese Weise ist sichergestellt, dass hinreichend Freiraum zwischen dem Vorsprung 166 des Schaltauges 158 und einer mit dem kleinsten Ritzel R12 in Eingriff stehenden Kette vorhanden ist. Die siebte Distanz D7 sollte im Hinblick auf eine möglichst optimale Ausnutzung des zur Verfügung stehenden Bauraums jedoch kleiner sein als 3,2 mm.

### Drittes Ausführungsbeispiel

Im Folgenden wird eine Hinterradbaugruppe 1000 gemäß einer dritten Ausführungsform der Erfindung beschrieben. Elemente, die bereits in Bezug auf die erste oder zweite Ausführungsform beschrieben wurden und entsprechend in der dritten Ausführungsform enthalten sind, sind mit um den Wert 1000 erhöhten Bezugszeichen versehen und werden im Folgenden lediglich insoweit beschrieben, wie deren Ausgestaltung oder Funktion von den vorherigen Beschreibungen abweicht.

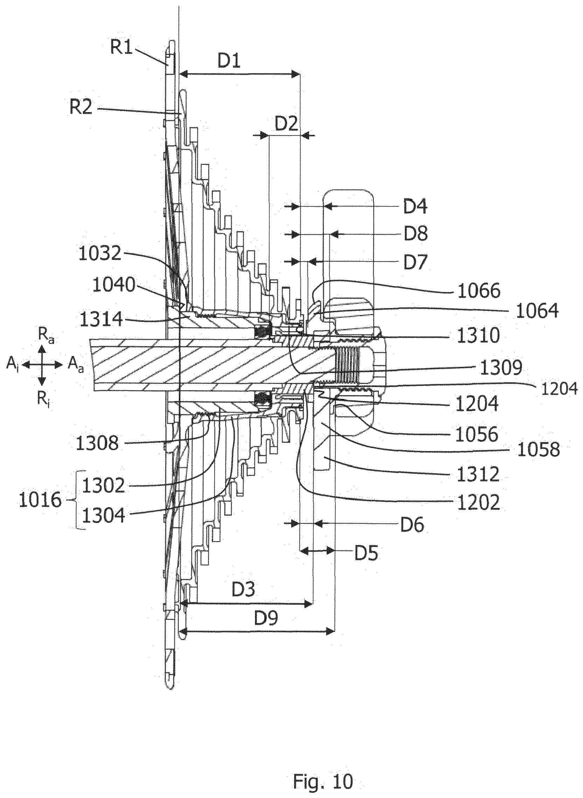

Die in Figuren 10-12 dargestellte Mehrfachritzelanordnung 1026 gemäß der dritten Ausführungsform der Erfindung ist mit einem dritten Antreiber-Typ 116 gekoppelt oder koppelbar, wobei im gekoppelten Zustand wenigstens zwei Ritzel mit den kleinsten Zähnezahlen R12, R11 radial freitragend ausgeführt sind und über wenigstens ein weiteres Ritzel R10 mit größerer Zähnezahl mit dem dritten Antreiber-Typ gekoppelt sind. Wie am Besten in dem vergrößerten Ausschnitt von Figur 11b ersichtlich, sind die drei Ritzel R12, R11, R10 mit den kleinsten Zähnezahlen derart angeordnet, dass die Ritzelmittelebene 1032 des Ritzels mit der drittkleinsten Zähnezahl R10 axial außerhalb der axial äußeren Stirnfläche 1042 des dritten Antreiber-Typs verläuft. Zudem ist bei dem dritten Antreiber-Typ sogar die Ritzelinnenfläche/Ritzelinnenebene 1030 des drittkleinsten Ritzels R10 axial außerhalb der axial äußeren Stirnfläche 1042 des dritten Antreiber-Typs 1016 angeordnet, wie der mit Bezugszeichen 1300 gekennzeichnete Abstand zwischen Ritzelinnenfläche/Ritzelinnenebene 1030 und der axial äußeren Stirnfläche 1042 des dritten Antreiber-Typs 1016 verdeutlicht.

Der dritte Antreiber-Typ 1016 unterscheidet sich von dem ersten und zweiten Antreiber 16, 116 dadurch, dass dieser einen Antreiberkörper 1302 und einen Aufnahmekörper 1304 umfasst. Der Antreiberkörper 1302 weist einen Antreiberanschlag 1040 und einen diesen benachbarten Bereich auf, der an seiner Außenumfangsfläche ein Außengewinde 1306 aufweist. Der Aufnahmekörper 1304 weist hingegen ein Innengewinde 1308 an seiner Innenumfangsfläche auf, das dazu eingerichtet ist, in dem zusammengebauten Zustand des dritten Antreiber-Typs 1016 in das Außengewinde 1306 des Antreiberkörpers 1302 einzugreifen.

Im montierten Zustand der Mehrfachritzelanordnung mit dem dritten Antreiber-Typ schlägt der Aufnahmekörper 1304 mit seinem axial inneren Ende an ein größtes Ritzel R1 der Mehrfachritzelanordnung 1026 an, sodass das größte Ritzel R101 sowohl an den Antreiberanschlag 1040 des Antreiberkörpers 1302 als auch an den Aufnahmekörper 1304 an. An dem entgegengesetzten axial äußeren Ende des Aufnahmekörpers 1304 erstreckt sich der Aufnahmekörper 1304 mit einem axial äußeren Endabschnitt 1309 über den Antreiberkörper 1302 nach axial außen Aₐ hinaus. Wie später genauer erläutert, kann somit der Aufnahmekörper 1304 auch Ritzel axial fixieren, die außerhalb des Antreiberkörpers 1302 angeordnet sind. Dazu umfasst der Aufnahmekörper 1304 benachbart seinem axial äußeren Ende ein Sicherungselement 1310, das die Mehrfachritzelanordnung 1026 axial fixiert und folglich eine axiale Verschiebung der Ritzel verhindert. Ferner greift der Aufnahmekörper 1310, wie in Figur 10 oder Figur 11 dargestellt, mit dem Sicherungselement 1310 in eine Aussparung 1049 des kleinsten Ritzels R12 ein. Das Sicherungselement 1310 kann ein Sicherungsring 1310 sein, der in einer Nut 1312 nahe dem axial äußeren Ende des Aufnahmekörpers 1304 aufgenommen ist. Das Sicherungselement 1310 kann also lösbar mit dem Aufnahmekörper 1304 verbunden sein.

Auch wenn der Aufnahmekörper 1304 nicht als Verschlusselement bezeichnet wird, so kann dieser dennoch die Funktion eines solchen, wie die axiale Fixierung der Ritzel, übernehmen.

Steht das Sicherungselement 1310 mit der Aussparung 1049 des kleinsten Ritzels R12 in Eingriff, schließt eine axial äußere Stirnseite 1315 des kleinsten Ritzels R12 mit einer axial äußeren Stirnseite 1316 des Aufnahmekörpers 1304 bündig ab, wie beispielsweise in Figur 11b ersichtlich. In einer alternativen Ausführung kann die axiale Stirnseite 1316 des Aufnahmekörpers 1304 geringfügig von der Außenseitenfläche 1028 des kleinsten Ritzels R12 hervorstehen, jedoch um maximal 0,9 mm. Es versteht sich, dass somit das Sicherungselement 1310 im Bereich der Aussparung 1049 des kleinsten Ritzels R12 angeordnet sein kann. Das Sicherungselement 1310 lieg also von der Außenseitenfläche 1028 des kleinsten Ritzels R12 nach axial innen Aᵢ versetzt.

Der Innendurchmesser des axial äußeren Endabschnitts 1309 des Aufnahmekörpers 1304 ist kleiner als ein Außendurchmesser des Antreiberkörpers 1302. Folglich können Ritzel R12, R11 axial außerhalb des Antreiberkörpers 1302 aufgenommen werden, die einen Innendurchmesser aufweisen, der kleiner ist als ein Außendurchmesser des Antreiberkörpers 1302.

In Figur 10 sind die bereits zu den vorherigen Ausführungsformen eingeführten Distanzen dargestellt. Eine erste Distanz D1 in axialer Richtung von dem Antreiberanschlag 1040 bis zu der Außenseitenfläche 1028 des Ritzels R12 mit der kleinsten Zähnezahl kann größer als 37,4 mm sein. Ferner kann die erste Distanz D1 größer als 38,0 mm sein oder sogar bevorzugt 39,9 mm sein. Eine zweite Distanz D2 in axialer Richtung von der axial äußeren Stirnseite 1042 des Antreiberkörpers 1302 zu einer Außenseitenfläche 1028 des Ritzels mit der kleinsten Zähnezahl R12 kann kleiner sein als 9,1 mm und ist bevorzugt 7,1 +/- 0,12 mm.

Ferner umfasst die Hinterradbaugruppe 1000 eine Nabenendkappe 1202, die sowohl an ein Lager des Antreibers 1016 als auch an ein Schaltauge 1058 anschlägt. Eine dritte Distanz D3 zwischen dem Antreiberanschlag 1040 und der radial äußeren Stirnseite 1204 der Nabenendkappe 1202 kann in dem Zusammenbauzustand der Hinterradbaugruppe 1000 mit dem Fahrradrahmen größer als 42,5 mm sein. Noch bevorzugter ist die dritte Distanz D3 in etwa 44,1 +1,0/-0,3 mm. Die vierte Distanz D4 zwischen der Außenseitenfläche 1028 des kleinsten Ritzels R12 zu einer Umfangsfläche des Rahmenabschnitts 1014 bzw. dessen Ausfallendes 1018 kann größer als 8,35 mm sein. Für eine effektive Ausnutzung des Bauraums bzw. des der Hinterradbaugruppe 1000 zur Verfügung stehenden Bauraums kann die vierte Distanz D4 bevorzugt 7,35 +/- 0,15 mm sein. Die fünfte Distanz D5 in axialer Richtung von der Außenseitenfläche 1028 des Ritzels mit der kleinsten Zähnezahl R12 zu einer vertieften Fläche 1056 am hinteren Ausfallende 1018 des Fahrradrahmens kann kleiner als 11,5 mm sein. Für eine besonders effektive Ausnutzung des Bauraums kann die fünfte Distanz D5 jedoch bevorzugt 10,5 +/- 0,15 mm sein. Zudem kann eine sechste Distanz D6 zwischen der Außenseitenfläche 1028 des Ritzels R12 mit der kleinsten Zähnezahl und einer nach radial außen weisenden Stirnseite 1204 der Nabenendkappe 4,7 +/- 0,2 mm sein.

Das Schaltauge 1058 entspricht dem in Bezug auf die erste Ausführungsform ausgeführten Schaltauge 58. Die siebte Distanz D7 zwischen der Außenseitenfläche 1028 des kleinsten Ritzels R12 und einer axial inneren Fläche des Vorsprungs 1066 des Schaltauges 1058 beträgt beispielsweise 2,35 mm. Ferner kann zur Charakterisierung der Lage der Hinterradbaugruppe gemäß der dritten Ausführungsform der Erfindung eine achte Distanz D8 zwischen der Außenseitenfläche 1028 des kleinsten Ritzels R12 zu einer axial außenliegenden Seitenfläche eines metallischen Teils 1312 des Schaltauges 1058 verwendet werden. Diese achte Distanz D8 ist beispielsweise 9,35 mm. Hier wird also davon ausgegangen, dass ein Schaltauge 1058 verwendet wird, welches einen metallischen Teil 1312 aufweist, beispielsweise das in Figur 4b dargestellte Schaltauge. Dieser metallische Teil 1312 ist in dem zweiten Bereich 1064 des Schaltauges 1058 mit Kunststoff umspritzt. Zum Beispiel ist der zweite Bereich 1064 mit dessen Vorsprung 1066 aus Kunststoff ausgebildet. Beispielsweise kann der erste Bereich 1060 zur Aufnahme eines hinteren Schaltwerks und der Bereich zur Montage an die Hinterradnabe 1017 metallisch sein.

Ferner ist eine neunte Distanz D9 von dem Antreiberanschlag 1040 zu einer vertieften Fläche 1056 an dem hinteren Ausfallende 1018 beispielsweise 51,1 mm.

Eine Übertragung eines Drehmoments eines auf eines der Ritzel R2-R12 der Mehrfachritzelanordnung 1026 ausgeübten Drehmoments erfolgt über miteinander verbundene Ritzel 1026 zu dem größten Ritzel R1. Zum Beispiel sind dafür alle Ritzel der Mehrfachritzelanordnung 1026 drehmomentübertragend miteinander verbunden. Beispielsweise sind zudem alle Ritzel, abgesehen von dem größten Ritzel R1, integral miteinander verbunden. Grundsätzlich ist eine mittels 3D-Druck hergestellte Mehrfachritzelanordnung 1026 möglich. Alternativ kann die Verbindung mittels Verbindungselementen, wie Flanschen oder Haltebolzen, gebildet sein. Ferner können die Ritzel auch integral verbunden sein. Zur Übertragung des Drehmoments von dem größten Ritzel R1 zu dem dritten Antreiber-Typ 1016 weist der Antreiberkörper 1302 an seiner Außenumfangsfläche, die einer axial inneren Stirnfläche des Antreiberkörpers 1302 benachbart ist, ein Mitnehmerprofil 1032 auf, in das ein komplementäres Mitnehmerprofil auf der Innenumfangsfläche des größten Ritzels R1 drehmomentübertragend eingreift. Zudem ist das größte Ritzel R1 in dem Bereich 1314, in dem das Mitnehmerprofil 1032 angeordnet ist, radial an dem Antreiberkörper 1302 abgestützt.

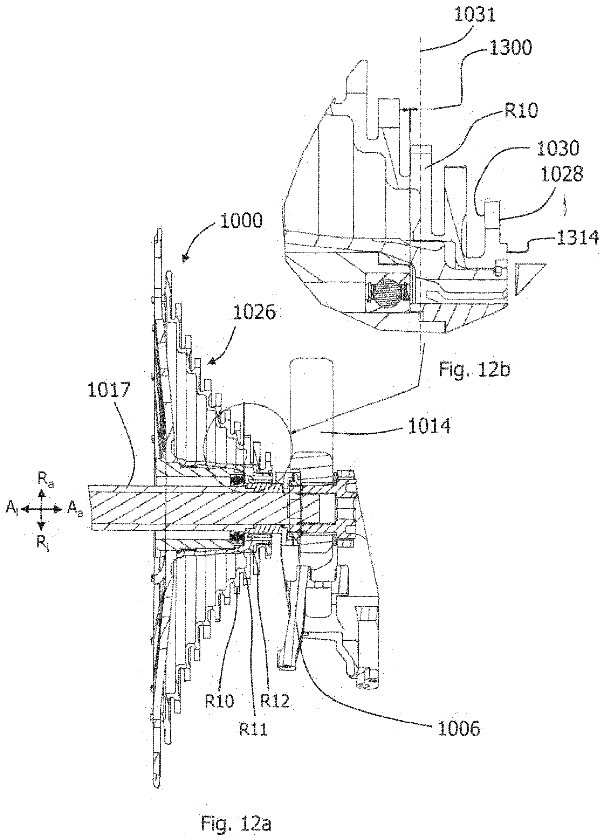

Die Figuren 12a-b zeigen eine an einen Fahrradrahmen montierte Hinterradbaugruppe 1000 mit einer erfindungsgemäßen Mehrfachritzelanordnung 1026. Bei der in Figuren 12a-b dargestellten Hinterradbaugruppe 1000 ist das hintere Schaltwerk mittels eines Bauelements 1006, das auch als B-Knuckle 1006 bezeichnet wird, an dem hinteren Ausfallende 1018 des Rahmenabschnitts 1014 koaxial mit der Drehachse 1024 montiert. Ein Schaltauge zur Anbringung des hinteren Schaltwerks ist also gemäß der vierten Ausführungsform der Erfindung nicht vorgesehen, vielmehr ist das das hintere Schaltwerk tragende Bauelement 1006 mit der als Steckachse ausgebildeten Hinterradachse 1015 an dem Rahmenabschnitt 1014 befestigt.

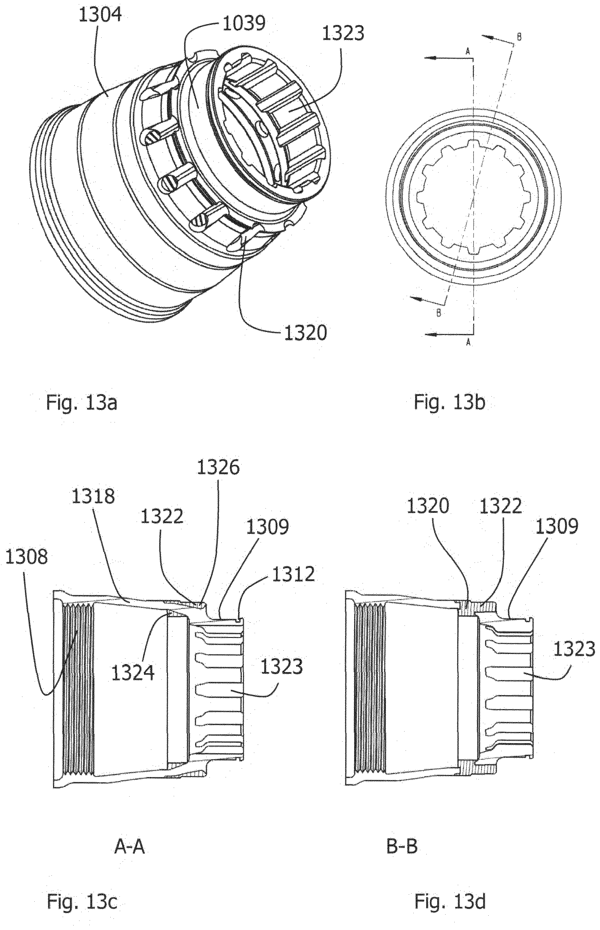

Im Folgenden wird unter Bezugnahme auf die Figuren 13a-d der Aufnahmekörper 1304 des dritten Antreiber-Typs 1016 genauer beschrieben.

Die Figuren 13a-d zeigen den Aufnahmekörper 1304 mit seinem axial äußeren Endabschnitt 1309, der im zusammengebauten Zustand des dritten Antreiber-Typs in axialer Richtung nach radial außen Rₐ über den Antreiberkörper 1302 hervorsteht. Zudem ist in den Querschnittsansichten A-A und B-B der Figuren 13c und 13d das Innengewinde 1308 ersichtlich, das in das Außengewinde des Antreiberkörpers 1302 eingreifen kann. In einem mittleren Bereich 1318 des Aufnahmekörpers 1302 zwischen dem Innengewinde 1308 und dem axial äußeren Endabschnitt 1309 läuft der Aufnahmekörper 1302 nach axial außen konisch zu.

Ferner ist in Figuren 13a, 13c-d die Nut 1312 ersichtlich, in welche das Sicherungselement 1310 zum axialen Fixieren der Mehrfachritzelanordnung 1026 eingreift. Es ist auch möglich, dass das Sicherungselement 1310 als Teil des Antreibers 1302 oder als Teil des Aufnahmekörpers 1304 definiert ist.

Wie in Figur 13a ersichtlich, weist der Aufnahmekörper 1304 Durchgangslöcher 1320 verteilt um seinen Umfang herum auf. Die Durchgangslöcher 1320 sind in dem mittleren Bereich 1318 und benachbart zu dem axial äußeren Endabschnitt 1309 des Aufnahmekörpers 1304 angeordnet. Die Durchgangslöcher sind dazu eingerichtet, einen thermoplastischen Kunststoff, wie POM, oder ein Elastomer derart aufzunehmen, dass sich dieses durch die Durchgangslöcher 1320 sowie entlang der sich radial außen und radial inneren anschließenden Bereiche erstreckt. Figur 13c zeigt einen Querschnitt A-A durch den Aufnahmekörper 1304 in einem Bereich, in dem keine Durchgangslöcher vorhanden sind und sich der thermoplastische Kunststoff oder das Elastomer 1322 sowohl radial außerhalb als auch radial innerhalb des Aufnahmekörpers 1304 befindet. Die Ausprägung des thermoplastischen Kunststoffs oder des Elastomers 1322 im Bereich der Durchgangslöcher 1320 ist in Figur 13d in der Querschnittsansicht B-B verdeutlicht. Der aus thermoplastischem Kunststoff oder Elastomer ausgebildete Bereich kann auch als Positionierkörper 1322 bezeichnet werden. Der Positionierkörper 1322 kann im Spritzgussverfahren um den Aufnahmekörper 1304 gespritzt werden.

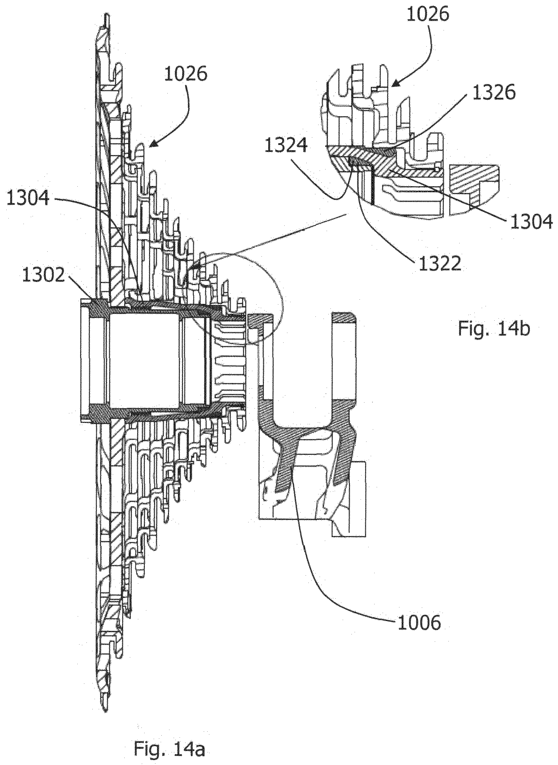

Der Positionierkörper 1322 bildet die Schnittstellen 1324, 1326 zu dem Antreiberkörper 1302 und der Mehrfachritzelanordnung 1026. In Figur 14 ist eine Antreiberkörper-Schnittstelle 1324 dargestellt, also ein Anliegen eines radial inneren Bereichs des Aufnahmekörpers 1304 an dem Antreiberkörper 1304. Ferner ist in Figur 14 auch eine Mehrfachritzelanordnung-Schnittstelle 1326 dargestellt, also ein Anliegen eines radial äußeren Bereichs des Aufnahmekörpers 1304 an der Mehrfachritzelanordnung 1026. Beide Schnittstellen 1324, 1326 sind radial versetzt angeordnet, wobei bevorzugt die Antreiberkörper-Schnittstelle 1324 axial weiter innen angeordnet ist als die Mehrfachritzelanordnung-Schnittstelle 1326. In einer nicht dargestellten alternativen Ausführung können sich die Schnittstellen 1324, 1326 radial überlappen.

Der Positionierkörper 1322 ermöglicht eine radiale und axiale Abstützung der Mehrfachritzelanordnung 1026 an dem Antreiberkörper 1302. In der Darstellung von Figur 14 stützt sich das drittkleinste Ritzel R10 auf dem Aufnahmekörper 1304 radial ab, während die beiden kleinsten Ritzel R12 und R11 freitragend ausgeführt sind.

Der Aufnahmekörper 1304 weist an einer Innenumfangsfläche des axial äußeren Endabschnitts 1309 eine Werkzeugschnittstelle 1323 auf. In diese kann ein Werkzeug eingreifen und der Aufnahmekörper kann derart gedreht werden, dass sein Innengewinde 1308 in das Außengewinde 1306 des Antriebskörpers 1302 eingreift, sodass beide miteinander fest verbunden sind.

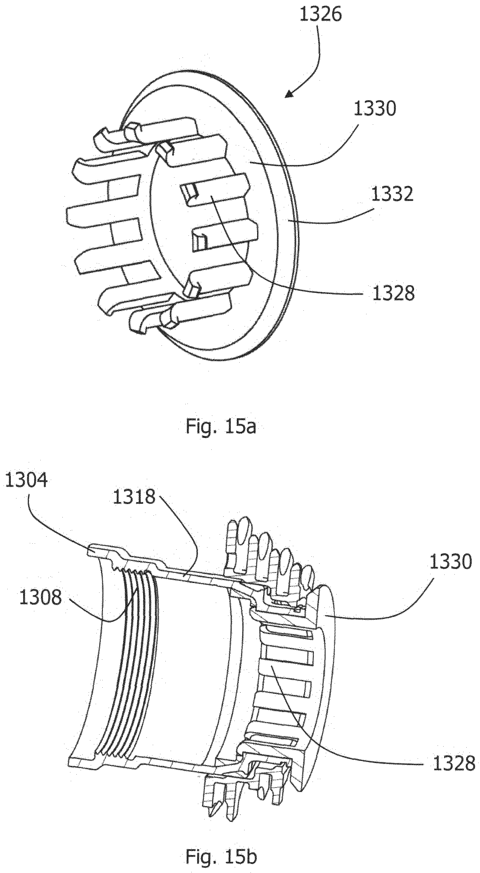

Figuren 15a-b zeigen einen Ketten-Abwurfschutz 1326, der in der Darstellung an dem Aufnahmekörper 1304 befestigt ist. Alternativ kann der Ketten-Abwurfschutz 1326 auch an der Mehrfachritzelanordnung 1026 befestigt sein, was jedoch nicht dargestellt ist. Der Ketten-Abwurfschutz 1326 umfasst Halterungselemente 1328 zum Eingreifen in den Aufnahmekörper 1304 oder die Mehrfachritzelanordnung 1026 sowie eine Auskragung 1330 nach radial außen. Eine radial äußere Fläche 1332 der Auskragung des Ketten-Abwurfschutzes 1326 ist als schräge Fläche ausgebildet, die im montierten Zustand in Richtung des Ritzels R12 mit der kleinsten Zähnezahl abfällt, wie in Figur 15a ersichtlich. Die Auskragung 1326 weist im montierten Zustand einen Außendurchmesser auf, der kleiner ist als ein Außendurchmesser des Ritzels mit der kleinsten Zähnezahl.

Zur Befestigung des Ketten-Abwurfschutzes 1326 sind die Halterungselemente 1328 elastisch ausgebildet und dazu eingerichtet, in den Aufnahmekörper 1304 oder die Mehrfachritzelanordnung 1026 einzugreifen. Der Eingriff in den Aufnahmekörper erfolgt im Bereich des axial äußeren Endabschnitts 1309 des Aufnahmekörpers 1304. Beispielsweise können die Halterungselemente des Ketten-Abwurfschutzes in die Werkzeugschnittstelle 1323 des Aufnahmekörpers 1304 eingreifen.

Auch wenn sich die vorstehenden Ausführungsbeispiele auf eine Mehrfachritzelanordnung mit 12 Ritzeln beziehen, kann die Erfindung gleichermaßen auf eine Mehrfachritzelanordnung mit anderen Ritzelzahlen, wie 11 oder 13 Ritzeln angewendet werden. Im Falle von 11 Ritzeln sind die zwei kleinsten Ritzel im Rahmen der Notation der Erfindung mit R11 und R10 und das drittkleinste Ritzel mit R9 zu bezeichnen. Das größte Ritzel kann unabhängig von der Gesamtzahl der Ritzel als R1 bezeichnet werden. Gleichermaßen können im Falle von 13 Ritzeln die zwei kleinsten Ritzel im Rahmen der Notation der Erfindung mit R13 und R12und das drittkleinste Ritzel mit R11 bezeichnet werden. Unabhängig von der Ritzelanzahl kann das kleinste Ritzel 10 oder weniger Zähne aufweisen.

Wird in dieser Anmeldung von einem kleinsten oder größten Ritzel gesprochen, so bezieht sich diese Aussage auf ein Ritzel mit der kleinsten Zähnezahl bzw. auf ein Ritzel mit der größten Zähnezahl. Es versteht sich, dass ein zweitkleinstes oder drittkleinstes Ritzel ein Ritzel mit der zweitkleinsten bzw. drittkleinsten Zähnezahl bezeichnet.

Die Anordnung von wenigstens zwei freitragenden Ritzeln ermöglicht es, Ritzel mit einem Fußkreis zu verwenden, der kleiner ist als ein Außendurchmesser des Antreibers. Dadurch kann die Mehrfachritzelanordnung beispielsweise Ritzel mit weniger als 10 Zähnen umfassen.

In axialer Richtung, außen vor dem Antreiber angeordnete Ritzel ermöglichen zudem eine optimale Ausnutzung der zum Einbau von Antreiber und Mehrfachritzelanordnung zur Verfügung stehenden Einbaubreite zwischen den Ausfallenden des Fahrradrahmens. Es können dadurch nicht nur mehr Ritzel an bzw. vor dem Antreiber angebracht werden. Ferner besteht die Möglichkeit, die gesamte Mehrfachritzelanordnung weiter axial nach außen zu verlagern. Eine solche Verlagerung ermöglicht es, einen unerwünschten Kettenschräglauf der Kette zwischen einem vorderen antreibenden Ritzel und der Ritzel der hinteren Mehrfachritzelanordnung zu verringern. Dies ist besonders von Vorteil, wenn lediglich ein vorderes antreibendes Ritzel verwendet wird. Insgesamt kann also mit einem geringeren Kettenschräglauf eine Antriebseffizienz verbessert und ein Verschleiß der Kette verringert werden. Zudem werden Kettengeräusche, die der Radfahrer als unangenehm empfindet, verringert. Eine platzsparende und materialsparende Ausgestaltung der Hinterradbaugruppe wird durch die radial freitragende Ausführung der wenigstens zwei Ritzel erzielt. Das bedeutet, der Antreiber benötigt bevorzugt kein zusätzliches Haltelement zur radialen Abstützung der axial vor dem Antreiber angeordneten Ritzel. Für eine hinreichende Übertragung von im Betrieb des Fahrrads auftretenden Drehmomenten zu dem Antreiber und folglich zu der Hinterradnabe sorgt die Verbindung der freitragenden Ritzel zu einem weiteren Ritzel mit größerer Zähnezahl, das wiederum mit dem Antreiber gekoppelt oder koppelbar ist. Es versteht sich, dass jegliche materialsparende Ausgestaltung ohne zusätzliches Halteelement auch zu einer Gewichtsreduzierung des Antreibers beiträgt.

Besonders effektiv wird die für die Hinterradnabe zur Verfügung stehende Einbaubreite genutzt, wenn die drei Ritzel mit den kleinsten Zähnezahlen derart angeordnet sind, dass die Ritzelmittelebene des Ritzels mit der drittkleinsten Zähnezahl der Mehrfachritzelanordnung im Bereich einer axialen Stirnfläche des Antreibers oder axial außerhalb des Antreibers verläuft. Im Vergleich zu aus dem Stand der Technik bekannten Lösungen ermöglicht es die erfindungsgemäße Lösung, bis zu 2,5 mm der zur Verfügung stehenden Einbaubreite mehr für die Anordnung der Mehrfachritzelanordnung zu nutzen.

Im Folgenden wird auf verschiedene Aspekte der Erfindung eingegangen:
Aspekt 1: Mehrfachritzelanordnung (126; 1026) für eine Hinterradbaugruppe (100; 1000) für ein Fahrrad mit Kettenschaltung, wobei die Mehrfachritzelanordnung (126; 1026) eine Drehachse (124; 1024) aufweist und zur drehfesten Kopplung mit einem Antreiber (116; 1016) der Hinterradbaugruppe (100; 1000) ausgebildet ist, wobei die Mehrfachritzelanordnung umfasst: wenigstens 11 Ritzel mit sich unterscheidenden Zähnezahlen, wobei jedes Ritzel im Bereich seiner Zähne eine Innenseitenfläche (130, 1030) und eine Außenseitenfläche (128; 1028) sowie eine zwischen der Innenseitenfläche (130, 1030) und der Außenseitenfläche (128; 1028) liegende, orthogonal zur Drehachse (124, 1024) verlaufende Ritzelmittelebene (131; 1031) aufweist, wobei die Mehrfachritzelanordnung derart ausgebildet ist, dass im montierten Zustand: wenigstens zwei Ritzel (R12, R11) mit den kleinsten Zähnezahlen radial freitragend ausgeführt und über wenigstens ein weiteres Ritzel (R10) mit größerer Zähnezahl mit dem Antreiber (116, 1016) gekoppelt sind und die drei Ritzel (R12, R11, R10) mit den kleinsten Zähnezahlen derart angeordnet sind, dass die Ritzelmittelebene (131; 1031) des Ritzels (R10) mit der drittkleinsten Zähnezahl der Mehrfachritzelanordnung im Bereich einer axialen Stirnfläche (142; 1042) des Antreibers (116; 1016) oder axial außerhalb des Antreibers (116; 1016) verläuft.
Aspekt 2: Mehrfachritzelanordnung (1026) nach Aspekt 1, wobei zumindest die drei Ritzel (R12, R11, R10) mit den kleinsten Zähnezahlen derart angeordnet sind, dass eine entlang der Innenseitenfläche (1030) verlaufende Ritzelinnenebene des Ritzels (R10) mit der drittkleinsten Zähnezahl im Bereich der axialen Stirnfläche (1042) des Antreibers (1016) oder axial außerhalb des Antreibers (1016) verläuft.
Aspekt 3: Mehrfachritzelanordnung (126; 1026) nach Aspekt 1 oder 2, wobei ein Drehmoment von dem Ritzel (R12) mit der kleinsten Zähnezahl über ein benachbartes Ritzel (R11) mit der zweitkleinsten Zähnezahl zu dem Ritzel (R10; R10) mit der drittkleinsten Zähnezahl und von diesem zu dem Antreiber (116; 1016) übertragbar ist wird.
Aspekt 4: Mehrfachritzelanordnung (126; 1026) nach einem der vorangehenden Aspekte, wobei die zwei Ritzel (R12, R11) mit den kleinsten Zähnezahlen im montierten Zustand miteinander lösbar verbunden sind, bevorzugt indem diese mit komplementären Strukturen ineinander eingreifen und eine vordefinierte Drehorientierung der zwei Ritzel (R12, R11) zueinander festlegen.
Aspekt 5: Mehrfachritzelanordnung (126; 1026) nach einem der vorangehenden Aspekte, wobei die zwei Ritzel (R12, R11) mit den zwei kleinsten Zähnezahlen unlösbar miteinander verbunden sind, vorzugsweise indem diese zusammengefügt sind oder integral hergestellt sind, beispielsweise mittels 3D-Druck.
Aspekt 6: Mehrfachritzelanordnung (126; 1026) nach einem der vorangehenden Aspekte, wobei die zwei Ritzel (R12, R11), vorzugsweise drei Ritzel (R12, R11, R10), mit den kleinsten Zähnezahlen den Antreiber (116; 1016) zumindest abschnittsweise stirnseitig überspannen.
Aspekt 7: Mehrfachritzelanordnung (126; 1026) nach einem der vorangehenden Aspekte, wobei die wenigstens zwei radial freitragenden Ritzel (R12, R11) durch ein Verschlusselement (146; 1304) axial fixierbar sind.
Aspekt 8: Mehrfachritzelanordnung (126; 1026) nach Aspekt 7, wobei das Ritzel (R12) mit der kleinsten Zähnezahl an seiner Außenseitenfläche (128; 1028) eine axiale und radiale, vorzugsweise ringförmige, Aussparung (149; 1049) aufweist, die zur axialen und radialen Aufnahme zumindest eines Abschnitts des Verschlusselements (146; 1304) ausgebildet ist.
Aspekt 9: Mehrfachritzelanordnung (126) nach Aspekt 7 oder 8, wobei ein Innendurchmesser des Ritzels (R12) mit der kleinsten Zähnezahl gleich oder kleiner einem Innengewinde-Durchmesser eines Innengewindes des Antreibers (116) ist, das zur Aufnahme eines Außengewinnes des Verschlusselements (146) ausgebildet ist.
Aspekt 10: Mehrfachritzelanordnung (126) nach einem der Aspekte 7 bis 9, wobei wenigstens das kleinste Ritzel (R12), bevorzugt die wenigstens zwei freitragenden Ritzel (R12, R11), relativ zum Verschlusselement (146) drehbar ist/sind.
Aspekt 11: Mehrfachritzelanordnung (126; 1026) nach einem der vorangehenden Aspekte, wobei die Mehrfachritzelanordnung wenigstens 12 Ritzel, bevorzugt wenigstens 13 Ritzel, umfasst.
Aspekt 12: Mehrfachritzelanordnung (126; 1026) nach einem der vorangehenden Aspekte, wobei das kleinste Ritzel eine Zähnezahl von 10 oder weniger aufweist.
Aspekt 13: Mehrfachritzelanordnung (26) für eine Hinterradbaugruppe (10) für ein Fahrrad mit Kettenschaltung, bevorzugt nach einem der Aspekte 1 bis 12, wobei die Mehrfachritzelanordnung eine Drehachse (24) aufweist und zur drehfesten Kopplung mit einem Antreiber (16) der Hinterradbaugruppe (10) ausgebildet ist, wobei die Mehrfachritzelanordnung umfasst: wenigstens 11 Ritzel mit sich unterscheidenden Zähnezahlen, wobei jedes Ritzel im Bereich seiner Zähne eine Innenseitenfläche (30) und eine Außenseitenfläche (28) sowie eine zwischen der Innenseitenfläche (30) und der Außenseitenfläche (28) liegende, orthogonal zur Drehachse (24) verlaufende Ritzelmittelebene (31) aufweist, wobei die Mehrfachritzelanordnung (26) derart ausgebildet ist, dass im montierten Zustand bei einer axialen Länge (L2) des Antreibers (16) von einem Antreiberanschlag (40) zu einer axial äußeren Stirnseite (42) in einem Bereich von 34,5 mm bis 35,9 mm, bevorzugt 34,9 +/- 0,3 mm, folgendes gilt: eine erste Distanz (D1) in axialer Richtung von dem Antreiberanschlag (40) bis zu der Außenseitenfläche (28) des Ritzels (R12) mit der kleinsten Zähnezahl ist größer als 38 mm, ist bevorzugt größer als 39,1 mm, ist noch bevorzugter 39,9 +/- 0,2 mm, oder/und eine zweite Distanz (D2) in axialer Richtung von der axial äußeren Stirnseite (42) des Antreibers (16) zu einer Außenseitenfläche (28) des Ritzels (R12) mit der kleinsten Zähnezahl ist größer als 4,0 mm, ist bevorzugt 5,0 +/- 0,2 mm.
Aspekt 14: Mehrfachritzelanordnung (126) für eine Hinterradbaugruppe (100) für ein Fahrrad mit Kettenschaltung, bevorzugt nach einem der Aspekte 1 bis 12, wobei die Mehrfachritzelanordnung eine Drehachse (124) aufweist und zur drehfesten Kopplung mit einem Antreiber (116) der Hinterradbaugruppe (100) ausgebildet ist, wobei die Mehrfachritzelanordnung umfasst: wenigstens 11 Ritzel mit sich unterscheidenden Zähnezahlen, wobei jedes Ritzel im Bereich seiner Zähne eine Innenseitenfläche (130) und eine Außenseitenfläche (128) sowie eine zwischen der Innenseitenfläche (130) und der Außenseitenfläche (128) liegende, orthogonal zur Drehachse (124) verlaufende Ritzelmittelebene (131) aufweist, wobei die Mehrfachritzelanordnung (126) derart ausgebildet ist, dass im montierten Zustand bei einer axialen Länge (L2) des Antreibers (116) von einem Antreiberanschlag (140) zu einer axial äußeren Stirnseite (142) in einem Bereich von 25 mm bis 27 mm, bevorzugt 26,0 +/- 0,2 mm, folgendes gilt: eine erste Distanz (D1) in axialer Richtung von dem Antreiberanschlag (140) bis zu der Außenseitenfläche (128) des Ritzels (R12) mit der kleinsten Zähnezahl ist größer als 34 mm, ist bevorzugt 35,0 +/-0,2 mm, oder/und eine zweite Distanz (D2) in axialer Richtung von der axial äußeren Stirnseite (142) des Antreibers (116) zu der Außenseitenfläche (128) des Ritzels (R12) mit der kleinsten Zähnezahl ist größer als 8,0 mm, ist bevorzugt 9,0 +/- 0,2 mm.
Aspekt 15: Mehrfachritzelanordnung (126) nach Aspekt 13 oder Aspekt 14, wobei der Antreiber (16; 116) an einem ersten Bereich seiner radialen Außenfläche ein Mitnehmerprofil (32; 132) aufweist, das entlang einer ersten axialen Länge (L1) von dem Antreiberanschlag (40; 140) nach axial außen (Aₐ)angeordnet ist, die erste axiale Länge (L1) kleiner ist als eine zweite axiale Länge (L2), die sich von dem Antreiberanschlag (40; 140) bis zur axial äußeren Stirnseite (42; 142) des Antreibers (16; 116) erstreckt, der Antreiber (16; 116) an einem zweiten Bereich seiner radialen Außenfläche, der der Stirnseite (42, 142) des Antreibers (16, 116) benachbart ist, frei von dem Mitnehmerprofil (32, 132) ist, der Antreiber (16; 116) eine Öffnung aufweist, die sich von einer Antreiber-Mittelachse nach radial außen (Rₐ) und von der axial äußeren Stirnseite (42; 142) nach axial innen (Aᵢ) erstreckt, und die Öffnung an ihrer radialen Innenfläche ein Innengewinde (38) aufweist.
Aspekt 16: Mehrfachritzelanordnung (26; 126) nach Aspekt 15, wobei die erste axiale Länge (L1) des Antreibers (16; 116), entlang der das Mitnehmerprofil (32; 132) an dem Antreiber angeordnet ist, von dem Antreiberanschlag (40; 140) bis zum Ende des Mitnehmerprofils (32; 132) größer als 32,9 mm ist, bevorzugt 33,2 +/- 0,2 mm ist, wenn die Mehrfachritzelanordnung (126) nach Aspekt 13 ausgebildet ist, oder größer als 24,7 mm ist, bevorzugt 25,7 +/- 0,2 mm ist, wenn die Mehrfachritzelanordnung (26) nach Aspekt 14 ausgebildet ist.
Aspekt 17: Mehrfachritzelanordnung (26; 126) nach einem der Aspekte 13 bis 16, wobei die zweite axiale Länge (L2) des Antreibers (16; 116) von dem Antreiberanschlag (40, 140) bis zu der Stirnseite (42, 142) des Antreibers größer als 34,2 mm ist, bevorzugt 34,9 +/- 0,2 mm ist, wenn die Mehrfachritzelanordnung (26) nach Aspekt 13 ausgebildet ist, größer als 25,0 mm ist, bevorzugt 26,0 +/- 0,2 mm ist, wenn die Mehrfachritzelanordnung (126) nach Aspekt 14 ausgebildet ist.
Aspekt 18: Mehrfachritzelanordnung (26; 126) nach einem der Aspekte 13 bis 17, wobei ein erster Außendurchmesser (d1) des Antreibers (16; 116) im ersten Bereich entlang der ersten axialen Länge (L1) des Antreibers größer als 34,2 mm ist, bevorzugt 34,5 +/- 0,15 mm ist, wenn die Mehrfachritzelanordnung (26) nach Aspekt 13 ausgebildet ist, oder größer als 32 mm ist, bevorzugt 32,60 +0,05/-0,1 mm ist, wenn die Mehrfachritzelanordnung (126) nach Aspekt 14 ausgebildet ist.
Aspekt 19: Mehrfachritzelanordnung (26; 126) einem der Aspekte 13 bis 18, wobei ein zweiter Außendurchmesser (d2) des Antreibers (16, 116) im zweiten Bereich, der der Stirnseite (42; 142) des Antreibers benachbart ist, größer als 31,4 mm ist, bevorzugt 32,1 +/- 0,2 mm ist, wenn die Mehrfachritzelanordnung (26) nach Aspekt 13 ausgebildet ist, oder größer als 28,5 mm ist, bevorzugt 29,5 +/- 0,1 mm ist, wenn die Mehrfachritzelanordnung (126) nach Aspekt 14 ausgebildet ist.
Aspekt 20: Mehrfachritzelanordnung (26; 126) nach einem der Aspekte 13 bis 19, wobei ein erster Nenndurchmesser (d3) des Innengewindes (38) des Antreibers axial benachbart seiner Stirnseite (42; 142) größer als 29,8 mm ist, bevorzugt 30,6 +/-0,2 mm ist, wenn die Mehrfachritzelanordnung (26) nach Aspekt 13 ausgebildet ist, oder größer als 25,2 mm ist, bevorzugt 26 +/- 0,2 mm ist, wenn die Mehrfachritzelanordnung (126) nach Aspekt 14 ausgebildet ist.
Aspekt 21: Mehrfachritzelanordnung (1026) für eine Hinterradbaugruppe (1000) für ein Fahrrad mit Kettenschaltung, bevorzugt nach einem der Aspekte 1 bis 12, wobei die Mehrfachritzelanordnung eine Drehachse (1024) aufweist und zur drehfesten Kopplung mit einem Antreiber (1016) der Hinterradbaugruppe (1000) ausgebildet ist, wobei die Mehrfachritzelanordnung umfasst: wenigstens 11 Ritzel mit sich unterscheidenden Zähnezahlen, wobei jedes Ritzel im Bereich seiner Zähne eine Innenseitenfläche (1030) und eine Außenseitenfläche (1028) sowie eine zwischen der Innenseitenfläche (1030) und der Außenseitenfläche (1028) liegende, orthogonal zur Drehachse (1024) verlaufende Ritzelmittelebene (1031) aufweist, wobei die Mehrfachritzelanordnung (1026) derart ausgebildet ist, dass im montierten Zustand bei einer axialen Länge (L2) des Antreibers (1016) von einem Antreiberanschlag (1040) zu einer axial äußeren Stirnseite (1042) in einem Bereich von 28,5 mm bis 30,5 mm, bevorzugt 29,5 +/- 0,2 mm folgendes gilt: eine erste Distanz (D1) in axialer Richtung von dem Antreiberanschlag (1040) bis zu der Außenseitenfläche (1028) des Ritzels (R12) mit der kleinsten Zähnezahl ist größer als 37,4 mm, ist bevorzugt größer als 38,0 mm, ist noch bevorzugter 39,9 +/- 0,2 mm, oder/und eine zweite Distanz (D2) in axialer Richtung von der axial äußeren Stirnseite (1042) des Antreibers (1016) zu einer Außenseitenfläche (1028) des Ritzels (R12) mit der kleinsten Zähnezahl ist größer als 9,1 mm, ist bevorzugt 10,4 +/- 0,2 mm.
Aspekt 22: Mehrfachritzelanordnung (1026) nach Aspekt 21, wobei der Antreiber (1016) umfasst: einen Antreiberkörper (1302), der an einem dem Antreiberanschlag (1040) benachbarten Bereich seiner Außenumfangsfläche ein Außengewinde aufweist, und einen Aufnahmekörper (1304), der an seiner Innenumfangsfläche ein Innengewinde (1308) aufweist, das dazu eingerichtet ist, in das Außengewinde des Antreiberkörpers (1302) einzugreifen, der Aufnahmekörper (1304) im zusammengebauten Zustand des Antreibers (1016) radial außerhalb des Antreiberkörpers (1302) angeordnet ist und sich mit seinem axial äußeren Endabschnitt (1309) nach axial außen über den Antreiberkörper (1302) erstreckt, und ein Innendurchmesser des axial äußeren Endabschnitts (1309) des Aufnahmekörpers (1304) kleiner ist als ein Außendurchmesser des Antreiberkörpers (1302).
Aspekt 23: Mehrfachritzelanordnung (1026) nach Aspekt 22, wobei die axial äußere Stirnseite (1315) der Mehrfachritzelanordnung, bevorzugt die Außenseitenfläche (1028) des Ritzels (R12) mit der kleinsten Zähnezahl, bündig mit einer axialen Stirnseite (1316) des Aufnahmekörpers (1304) abschließt oder die axial äußere Stirnseite (1316) des Aufnahmekörpers (1304) um maximal 0,9 mm hervorsteht.
Aspekt 24: Mehrfachritzelanordnung (1026) nach Aspekt 22 oder 23, wobei ein Innendurchmesser des Aufnahmekörpers (1304) zwischen seinem Innengewinde (1308) und seinem hervorstehenden axial äußeren Endabschnitt (1309) konisch zuläuft.
Aspekt 25: Mehrfachritzelanordnung (1026) nach einem der Aspekte 22 bis 24, wobei eine Schnittstelle (1324) zwischen dem Aufnahmekörper (1304) und dem Antreiberkörper (1302) axial weiter innen angeordnet ist als eine Schnittstelle (1326) zwischen dem Aufnahmekörper (1304) und der Mehrfachritzelanordnung (1026).
Aspekt 26: Mehrfachritzelanordnung (1026) nach einem der Aspekte 22 bis 25, wobei der Antreiberkörper (1302) an seiner Außenumfangsfläche, die benachbart seines Antreiberanschlags (1040) angeordnet ist, ein Mitnehmerprofil (1032) aufweist.
Aspekt 27: Mehrfachritzelanordnung (26; 126; 1026) nach einem der Aspekte 15 bis 20 oder nach Aspekt 26, wobei das Mitnehmerprofil (32; 132; 1032) Splines umfasst, deren Anzahl 8, 9 oder 22 beträgt.
Aspekt 28: Hinterradbaugruppe (10; 100; 1000) für ein Fahrrad mit Kettenschaltung, umfassend: eine zwischen zwei gegenüberliegenden Rahmenabschnitten (12, 14) eines Fahrradrahmens anordenbare Hinterradnabe, einen drehbar auf der Hinterradnabe angebrachten Antreiber (16; 116; 1016) und eine drehfest mit dem Antreiber (16; 116; 1016) gekoppelte oder koppelbare Mehrfachritzelanordnung (26; 126; 1026) nach einem der vorangehenden Aspekte.
Aspekt 29: Hinterradbaugruppe (10; 100; 1000) nach Aspekt 28, ferner umfassend eine Nabenendkappe (202; 1202), die an der Hinterradnabe (1017) in der Außenrichtung axial benachbart zu dem Antreiber (16; 116; 1016) angeordnet ist, und eine weitere Nabenendkappe (203), die benachbart zu dem antreiberferneren Rahmenabschnitt (12) an der Hinterradnabe (1017) angeordnet ist, wobei eine Nabenendkappen-Distanz (D0) axial äußerer Stirnseiten (204, 205) der Nabenendkappen (202, 203) mindestens 142 mm ist, bevorzugt mindestens 148 mm ist, noch bevorzugter mindestens 157 mm ist.
Aspekt 30: Hinterradbaugruppe (10; 100; 1000) nach Aspekt 29, wobei eine dritte Distanz (D3) zwischen dem Antreiberanschlag (40, 140, 1040) und der axial äußeren Stirnseite (204; 1204) der Nabenendkappe (202) größer als 42,5 mm ist, bevorzugt 44,1 +1,0/-0,3 mm ist, wenn die Mehrfachritzelanordnung (26) nach Aspekt 13 ausgebildet ist, oder größer als 38,1 mm ist, bevorzugt 39,7 +/- 0,2 mm ist, wenn die Mehrfachritzelanordnung (126) nach Aspekt 14 ausgebildet ist, oder größer als 42,5 mm ist, bevorzugt 44,1 +1,0/-0,3mm ist, wenn die Mehrfachritzelanordnung (1026) nach Aspekt 21 ausgebildet ist.
Aspekt 31: Hinterradbaugruppe (10; 100; 1000) und Fahrradrahmen für ein Fahrrad mit Kettenschaltung, wobei die Hinterradbaugruppe umfasst: eine zwischen zwei gegenüberliegenden Rahmenabschnitten (12, 14; 112, 114; 1012, 1014) des Fahrrads angeordnete Hinterradnabe (1017), einen drehbar mit der Hinterradnabe (1017) gekoppelten Antreiber (16; 116; 1016) und eine drehfest mit dem Antreiber (16; 116; 1016) gekoppelte oder koppelbare Mehrfachritzelanordnung (26; 126; 1026) mit wenigstens 11 Ritzeln mit sich unterscheidenden Zähnezahlen, wobei jedes Ritzel im Bereich seiner Zähne eine Innenseitenfläche (30; 130; 1030) und eine Außenseitenfläche (28; 128; 1028) sowie eine zwischen der Innenseitenfläche und der Außenseitenfläche liegende, orthogonal zur Hinterradnabe (1017) verlaufende Ritzelmittelebene (31; 131; 1031) aufweist, wobei im Zusammenbauzustand der Hinterradbaugruppe und dieser an dem Fahrradrahmen eine vierte Distanz (D4) in axialer Richtung von der Außenseitenfläche (28; 128; 1028) des Ritzels (R12) mit der kleinsten Zähnezahl zu einer Umfangsfläche am hinteren Ausfallende (18; 118; 1018) des Fahrradrahmens, die der Hinterradbaugruppe benachbart und dieser am nächsten ist, kleiner als 8,2 mm ist, bevorzugt 7,2 +/- 0,2 mm ist, wenn die Mehrfachritzelanordnung (26) nach einem der Aspekte 13, 15 bis 20 ausgebildet ist, oder kleiner als 8,7 mm ist, bevorzugt 7,7 +/- 0,2 mm ist, wenn die Mehrfachritzelanordnung (126) nach einem der Aspekte 14 bis 20 ausgebildet ist, oder kleiner als 8,35 mm ist, bevorzugt 7,35 +/- 0,15 mm ist, wenn die Mehrfachritzelanordnung (1026) nach einem der Aspekte 21 bis 27 ausgebildet ist, oder/und eine fünfte Distanz (D5) in axialer Richtung von der Außenseitenfläche (28; 128; 1028) des Ritzels (R12) mit der kleinsten Zähnezahl zu einer vertieften Fläche (56; 156; 1056) am hinteren Ausfallende des Fahrradrahmens, die der Hinterradbaugruppe benachbart ist und orthogonal zur Hinterradnabe (1017) verläuft, kleiner als 12,2 mm ist, bevorzugt 11,2 +/-0,2 mm ist, wenn die Mehrfachritzelanordnung (26) nach einem der Aspekt 13, 15 bis 20 ausgebildet ist, oderkleiner als 12,7 mm ist, bevorzugt 11,7 +/- 0,2 mm ist, wenn die Mehrfachritzelanordnung (126) nach einem der Aspekte 14 bis 20 ausgebildet ist, oder kleiner als 11,5 mm ist, bevorzugt 10,55 +/- 0,15 mm ist, wenn die Mehrfachritzelanordnung (1026) nach einem der Aspekte 21 bis 27 ausgebildet ist.
Aspekt 32: Hinterradbaugruppe (10; 100; 1000) und Fahrradrahmen nach Aspekt 31, wobei im Zusammenbauzustand der Hinterradbaugruppe mit dem Fahrradrahmen eine sechste Distanz (D6) zwischen der Außenseitenfläche (28; 128; 1028) des Ritzels (R12) mit der kleinsten Zähnezahl und der Nabenendkappe (202; 1202) definiert ist und ein Raumfaktor, der sich aus dem Quotienten der fünften Distanz (D5) und sechsten Distanz (D6) ergibt, kleiner als 3 und größer als 2,2 ist, bevorzugt zwischen 2,7 und 2,4 ist, noch bevorzugter 2,5 ist.
Aspekt 33: Hinterradbaugruppe (10; 100; 1000) und Fahrradrahmen nach Aspekt 32, wobei die sechste Distanz (D6) 4,7 +/- 0,2 mm ist.
Aspekt 34: Hinterradbaugruppe (10; 100; 1000) und Fahrradrahmen nach einem der Aspekte 31 bis 33, ferner umfassend ein Schaltauge (58), das an das hintere Ausfallende (18) des Fahrradrahmens montiert oder montierbar ist und im Zusammenbauzustand die Nabenendkappe (202) kontaktiert, sodass es an einer Position gehalten ist, bei der eine Hinterradachse (15) durch das Schaltauge (58) und die Hinterradnabe geführt werden kann.
Aspekt 35: Hinterradbaugruppe (10; 100; 1000) und Fahrradrahmen nach einem der Aspekte 31 bis 34, wobei die Mehrfachritzelanordnung der Hinterradbaugruppe nach einem der Aspekte 1 bis 27 ausgebildet ist.

## Patentansprüche

1. Mehrfachritzelanordnung (126; 1026) für eine Hinterradbaugruppe (100; 1000) für ein Fahrrad mit Kettenschaltung, wobei die Mehrfachritzelanordnung (126; 1026) eine Drehachse (124; 1024) aufweist und zur drehfesten Kopplung mit einem Antreiber (116; 1016) der Hinterradbaugruppe (100; 1000) ausgebildet ist, wobei die Mehrfachritzelanordnung umfasst:
- wenigstens 11 Ritzel mit sich unterscheidenden Zähnezahlen,
- wobei jedes Ritzel im Bereich seiner Zähne eine Innenseitenfläche (130, 1030) und eine Außenseitenfläche (128; 1028) sowie eine zwischen der Innenseitenfläche (130, 1030) und der Außenseitenfläche (128; 1028) liegende, orthogonal zur Drehachse (124, 1024) verlaufende Ritzelmittelebene (131; 1031) aufweist,
- wobei die Mehrfachritzelanordnung derart ausgebildet ist, dass im montierten Zustand:
- wenigstens zwei Ritzel (R12, R11) mit den kleinsten Zähnezahlen radial freitragend ausgeführt und über wenigstens ein weiteres Ritzel (R10) mit größerer Zähnezahl mit dem Antreiber (116, 1016) gekoppelt sind und
- die drei Ritzel (R12, R11, R10) mit den kleinsten Zähnezahlen derart angeordnet sind, dass die Ritzelmittelebene (131; 1031) des Ritzels (R10) mit der drittkleinsten Zähnezahl der Mehrfachritzelanordnung im Bereich einer axialen Stirnfläche (142; 1042) des Antreibers (116; 1016) oder axial außerhalb des Antreibers (116; 1016) verläuft.

2. Mehrfachritzelanordnung (1026) nach Anspruch 1, wobei zumindest die drei Ritzel (R12, R11, R10) mit den kleinsten Zähnezahlen derart angeordnet sind, dass eine entlang der Innenseitenfläche (1030) verlaufende Ritzelinnenebene des Ritzels (R10) mit der drittkleinsten Zähnezahl im Bereich der axialen Stirnfläche (1042) des Antreibers (1016) oder axial außerhalb des Antreibers (1016) verläuft.

3. Mehrfachritzelanordnung (126; 1026) nach Anspruch 1 oder 2, wobei ein Drehmoment von dem Ritzel (R12) mit der kleinsten Zähnezahl über ein benachbartes Ritzel (R11) mit der zweitkleinsten Zähnezahl zu dem Ritzel (R10; R10) mit der drittkleinsten Zähnezahl und von diesem zu dem Antreiber (116; 1016) übertragbar ist wird.

4. Mehrfachritzelanordnung (126; 1026) nach einem der vorangehenden Ansprüche, wobei die zwei Ritzel (R12, R11) mit den kleinsten Zähnezahlen im montierten Zustand miteinander lösbar verbunden sind, bevorzugt indem diese mit komplementären Strukturen ineinander eingreifen und eine vordefinierte Drehorientierung der zwei Ritzel (R12, R11) zueinander festlegen.

5. Mehrfachritzelanordnung (1026) für eine Hinterradbaugruppe (1000) für ein Fahrrad mit Kettenschaltung, bevorzugt nach einem der Ansprüche 1 bis 4, wobei die Mehrfachritzelanordnung eine Drehachse (1024) aufweist und zur drehfesten Kopplung mit einem Antreiber (1016) der Hinterradbaugruppe (1000) ausgebildet ist, wobei die Mehrfachritzelanordnung umfasst:
- wenigstens 11 Ritzel mit sich unterscheidenden Zähnezahlen,
- wobei jedes Ritzel im Bereich seiner Zähne eine Innenseitenfläche (1030) und eine Außenseitenfläche (1028) sowie eine zwischen der Innenseitenfläche (1030) und der Außenseitenfläche (1028) liegende, orthogonal zur Drehachse (1024) verlaufende Ritzelmittelebene (1031) aufweist,
- wobei die Mehrfachritzelanordnung (1026) derart ausgebildet ist, dass im montierten Zustand
- bei einer axialen Länge (L2) des Antreibers (1016) von einem Antreiberanschlag (1040) zu einer axial äußeren Stirnseite (1042) in einem Bereich von 28,5 mm bis 30,5 mm, bevorzugt 29,5 +/- 0,2 mm folgendes gilt:
- eine erste Distanz (D1) in axialer Richtung von dem Antreiberanschlag (1040) bis zu der Außenseitenfläche (1028) des Ritzels (R12) mit der kleinsten Zähnezahl ist größer als 37,4 mm, ist bevorzugt größer als 38,0 mm, ist noch bevorzugter 39,9 +/- 0,2 mm,
oder/und
- eine zweite Distanz (D2) in axialer Richtung von der axial äußeren Stirnseite (1042) des Antreibers (1016) zu einer Außenseitenfläche (1028) des Ritzels (R12) mit der kleinsten Zähnezahl ist größer als 9,1 mm, ist bevorzugt 10,4 +/- 0,2 mm.

6. Mehrfachritzelanordnung (1026) nach Anspruch 5, wobei
- der Antreiber (1016) umfasst:
- einen Antreiberkörper (1302), der an einem dem Antreiberanschlag (1040) benachbarten Bereich seiner Außenumfangsfläche ein Außengewinde aufweist, und
- einen Aufnahmekörper (1304), der an seiner Innenumfangsfläche ein Innengewinde (1308) aufweist, das dazu eingerichtet ist, in das Außengewinde des Antreiberkörpers (1302) einzugreifen,
- der Aufnahmekörper (1304) im zusammengebauten Zustand des Antreibers (1016) radial außerhalb des Antreiberkörpers (1302) angeordnet ist und sich mit seinem axial äußeren Endabschnitt (1309) nach axial außen über den Antreiberkörper (1302) erstreckt, und
- ein Innendurchmesser des axial äußeren Endabschnitts (1309) des Aufnahmekörpers (1304) kleiner ist als ein Außendurchmesser des Antreiberkörpers (1302).

7. Mehrfachritzelanordnung (1026) nach Anspruch 6, wobei die axial äußere Stirnseite (1315) der Mehrfachritzelanordnung, bevorzugt die Außenseitenfläche (1028) des Ritzels (R12) mit der kleinsten Zähnezahl, bündig mit einer axialen Stirnseite (1316) des Aufnahmekörpers (1304) abschließt oder die axial äußere Stirnseite (1316) des Aufnahmekörpers (1304) um maximal 0,9 mm hervorsteht.

8. Hinterradbaugruppe (10; 100; 1000) für ein Fahrrad mit Kettenschaltung, umfassend:
- eine zwischen zwei gegenüberliegenden Rahmenabschnitten (12, 14) eines Fahrradrahmens anordenbare Hinterradnabe,
- einen drehbar auf der Hinterradnabe angebrachten Antreiber (16; 116; 1016) und
- eine drehfest mit dem Antreiber (16; 116; 1016) gekoppelte oder koppelbare Mehrfachritzelanordnung (26; 126; 1026) nach einem der vorangehenden Ansprüche.

9. Hinterradbaugruppe (10; 100; 1000) nach Anspruch 8, ferner umfassend eine Nabenendkappe (202; 1202), die an der Hinterradnabe (1017) in der Außenrichtung axial benachbart zu dem Antreiber (16; 116; 1016) angeordnet ist, und eine weitere Nabenendkappe (203), die benachbart zu dem antreiberferneren Rahmenabschnitt (12) an der Hinterradnabe (1017) angeordnet ist, wobei eine Nabenendkappen-Distanz (D0) axial äußerer Stirnseiten (204, 205) der Nabenendkappen (202, 203) mindestens 142 mm ist, bevorzugt mindestens 148 mm ist, noch bevorzugter mindestens 157 mm ist.

10. Hinterradbaugruppe (10; 100; 1000) nach Anspruch 9, wobei
- eine dritte Distanz (D3) zwischen dem Antreiberanschlag (40, 140, 1040) und der axial äußeren Stirnseite (204; 1204) der Nabenendkappe (202) größer als 42,5 mm ist, bevorzugt 44,1 +1,0/-0,3mm ist, wenn die Mehrfachritzelanordnung (1026) nach Anspruch 5 ausgebildet ist.

11. Hinterradbaugruppe (10; 100; 1000) und Fahrradrahmen für ein Fahrrad mit Kettenschaltung, wobei die Hinterradbaugruppe umfasst:
- eine zwischen zwei gegenüberliegenden Rahmenabschnitten (12, 14; 112, 114; 1012, 1014) des Fahrrads angeordnete Hinterradnabe (1017),
- einen drehbar mit der Hinterradnabe (1017) gekoppelten Antreiber (16; 116; 1016) und
- eine drehfest mit dem Antreiber (16; 116; 1016) gekoppelte oder koppelbare Mehrfachritzelanordnung (26; 126; 1026) mit wenigstens 11 Ritzeln mit sich unterscheidenden Zähnezahlen, wobei jedes Ritzel im Bereich seiner Zähne eine Innenseitenfläche (30; 130; 1030) und eine Außenseitenfläche (28; 128; 1028) sowie eine zwischen der Innenseitenfläche und der Außenseitenfläche liegende, orthogonal zur Hinterradnabe (1017) verlaufende Ritzelmittelebene (31; 131; 1031) aufweist,
- wobei im Zusammenbauzustand der Hinterradbaugruppe und dieser an dem Fahrradrahmen
- eine vierte Distanz (D4) in axialer Richtung von der Außenseitenfläche (28; 128; 1028) des Ritzels (R12) mit der kleinsten Zähnezahl zu einer Umfangsfläche am hinteren Ausfallende (18; 118; 1018) des Fahrradrahmens, die der Hinterradbaugruppe benachbart und dieser am nächsten ist,
▪ kleiner als 8,35 mm ist, bevorzugt 7,35 +/- 0,15 mm ist, wenn die Mehrfachritzelanordnung (1026) nach einem der Ansprüche 5 bis 7 ausgebildet ist, oder/und
- eine fünfte Distanz (D5) in axialer Richtung von der Außenseitenfläche (28; 128; 1028) des Ritzels (R12) mit der kleinsten Zähnezahl zu einer vertieften Fläche (56; 156; 1056) am hinteren Ausfallende des Fahrradrahmens, die der Hinterradbaugruppe benachbart ist und orthogonal zur Hinterradnabe (1017) verläuft,
▪ kleiner als 11,5 mm ist, bevorzugt 10,55 +/- 0,15 mm ist, wenn die Mehrfachritzelanordnung (1026) nach einem der Ansprüche 5 bis 7 ausgebildet ist.

12. Hinterradbaugruppe (10; 100; 1000) und Fahrradrahmen nach Anspruch 11, wobei im Zusammenbauzustand der Hinterradbaugruppe mit dem Fahrradrahmen
- eine sechste Distanz (D6) zwischen der Außenseitenfläche (28; 128; 1028) des Ritzels (R12) mit der kleinsten Zähnezahl und der Nabenendkappe (202; 1202) definiert ist und
- ein Raumfaktor, der sich aus dem Quotienten der fünften Distanz (D5) und sechsten Distanz (D6) ergibt, kleiner als 3 und größer als 2,2 ist, bevorzugt zwischen 2,7 und 2,4 ist, noch bevorzugter 2,5 ist.

13. Hinterradbaugruppe (10; 100; 1000) und Fahrradrahmen nach Anspruch 12, wobei
- die sechste Distanz (D6) 4,7 +/- 0,2 mm ist.

14. Hinterradbaugruppe (10; 100; 1000) und Fahrradrahmen nach einem der Ansprüche 11 bis 13, ferner umfassend ein Schaltauge (58), das an das hintere Ausfallende (18) des Fahrradrahmens montiert oder montierbar ist und im Zusammenbauzustand die Nabenendkappe (202) kontaktiert, sodass es an einer Position gehalten ist, bei der eine Hinterradachse (15) durch das Schaltauge (58) und die Hinterradnabe geführt werden kann.

15. Hinterradbaugruppe (10; 100; 1000) und Fahrradrahmen nach einem der Ansprüche 11 bis 14, wobei die Mehrfachritzelanordnung der Hinterradbaugruppe nach einem der Ansprüche 1 bis 27 ausgebildet ist.
